(19) Europäisches Patentamt
European Patent Office
Office européen des brevets

(11) **EP 4 564 759 A1**

(12) **EUROPEAN PATENT APPLICATION**
published in accordance with Art. 153(4) EPC

(43) Date of publication:
**04.06.2025 Bulletin 2025/23**

(21) Application number: **22955307.8**

(22) Date of filing: **17.08.2022**

(51) International Patent Classification (IPC):
**H04L 27/00** (2006.01)

(52) Cooperative Patent Classification (CPC):
**H04L 27/00**

(86) International application number:
**PCT/CN2022/113137**

(87) International publication number:
**WO 2024/036526 (22.02.2024 Gazette 2024/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **QIAO, Yunfei**
  **Shenzhen, Guangdong 518129 (CN)**
• **ZHANG, Gongzheng**
  **Shenzhen, Guangdong 518129 (CN)**
• **WANG, Jian**
  **Shenzhen, Guangdong 518129 (CN)**
• **LI, Rong**
  **Shenzhen, Guangdong 518129 (CN)**
• **TONG, Wen**
  **Shenzhen, Guangdong 518129 (CN)**
• **MA, Jianglei**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **MODEL SCHEDULING METHOD AND APPARATUS**

(57)    This application relates to the field of wireless communication technologies, and provides a model scheduling method and an apparatus, to reduce air interface transmission overheads. In the method, a first node receives first information from a second node, where the first information indicates a first model. The first node processes a second model based on the first model, to obtain a third model. A structure of the third model is the same as a structure of the first model, and the second model and the first model are heterogeneous. The first node sends the second model to the second node. The third model meets a preset condition. Based on the foregoing solution, each node may process the second model based on the first model, to obtain the third model. Because structures of third models of all nodes are the same, impact on output results of the third models of the nodes due to different structures of models is reduced. Each node selects, based on evaluation of the third model, whether to send the second model to a central node, so that the air interface transmission overheads can be reduced.

FIG. 3

**Description**

TECHNICAL FIELD

This application relates to the field of wireless communication technologies, and in particular, to a model scheduling method and an apparatus.

BACKGROUND

To cope with the vision of inclusive intelligence in the future, intelligence is further evolved at a wireless network architecture layer, and artificial intelligence (artificial intelligence, AI) is to be deeply integrated with a wireless network. A concept of federated learning (federated learning, FL) is proposed to effectively resolve difficulties in current development of the artificial intelligence. While user data privacy and security are fully ensured, the FL facilitates edge devices and a central-end server to collaborate to efficiently complete learning tasks of a model.

However, in a federated learning system, a premise that a plurality of local models can be fused in a weighted averaging manner is that the local models have a same structure and a same quantity of parameters. However, in an actual network, distributed nodes have different device capabilities, but using a same local model for the distributed nodes typically limits flexibility of the distributed nodes, and different requirements of different distributed nodes cannot be met. In addition, each distributed node needs to report a local model in each training process, resulting in extremely high air interface transmission overheads.

SUMMARY

This application provides a model scheduling method and an apparatus, to meet requirements of different distributed nodes and reduce air interface transmission overheads.

According to a first aspect, a model scheduling method is provided. The method may be performed by a first node. Optionally, the first node may be a communication device or a chip/chip system. In the method, the first node receives first information from a second node, where the first information indicates a first model. The first node processes a second model based on the first model, to obtain a third model. A structure of the third model is the same as a structure of the first model, and the second model and the first model are heterogeneous. The first node sends the second model to the second node. The third model meets a preset condition.

Based on the foregoing solution, each node may process the second model based on the first model, to obtain the third model. Because structures of third models of all nodes are the same, impact on output results of the third models of the nodes due to different structures of models is reduced. Each node selects, based on evaluation of the third model, whether to send the second model to a central node, so that air interface transmission overheads can be reduced.

In a possible implementation, the first information includes a model index and/or a parameter of the first model. In a possible case, the first information may include the model index. The first model may be preset, and each first model may correspond to a model index. In another possible case, the first information may include the parameter of the first model. For example, the first information may include a parameter used to describe the first model. Based on the foregoing solution, the first model is indicated by using the model index, so that the air interface transmission overheads can be greatly reduced. In addition, because the first model is a lightweight model and has a small quantity of parameters, the first model is indicated by using the parameter of the first model. In comparison with a conventional technology, overheads needed for performing transmission of a complete model are small, and air interface utilization can be improved.

In a possible implementation, the first node receives information about a fourth model from the second node. The fourth model is obtained by using a second model of at least one first node. The first node processes the fourth model based on the second model of the first node, to obtain a fifth model. A structure of the fifth model is the same as a structure of the second model of the first node. The first node trains the fifth model based on a preset parameter, to obtain an updated second model. Based on the foregoing solution, model accuracy may be improved through iterative training.

In a possible implementation, the first node processes the updated second model based on a sixth model, to obtain an updated third model. The sixth model is indicated by the second node. The first node sends the updated second model to the second node. The updated third model meets the preset condition. Optionally, the sixth model and the first model may be a same model, or may be different models. The sixth model may be indicated by the second node. For example, the first node may receive indication information of the sixth model from the second node, and the indication information of the sixth model may include a model index and/or a parameter of the sixth model.

Based on the foregoing solution, the first node may select, in each training process based on a requirement, whether to update the first model, so that a fourth model obtained through training can better meet a requirement of the second node. In addition, the first node may evaluate performance of the second model based on the first model, and determine, based on an evaluation result, whether to send the second model to the second node. Therefore, a second model with poor performance may not be sent to the second node, so that accuracy of the fourth model obtained through the training can be improved.

In a possible implementation, the preset condition includes a first threshold, and the first threshold indicates performance of the third model or the first threshold indicates a performance variation of the third model. Based on the foregoing solution, by using the first threshold, the third model is evaluated, in other words, a training status of a model of the first node is evaluated. When the performance or the performance variation of the third model meets an evaluation parameter, the second model is sent to the second node, so that the air interface transmission overheads can be reduced.

In a possible implementation, the preset condition is indicated by the second node. Optionally, the preset condition may include the following condition 1 and condition 2. Condition 1: The preset condition includes the evaluation parameter. The evaluation parameter may indicate the performance of the third model, or indicate the performance variation of the third model. Optionally, the evaluation parameter may include the first threshold. Condition 2: The preset condition includes indication information. The first node may receive the indication information from the second node. The indication information may indicate the first node to send the second model. Based on the foregoing solution, the second node may flexibly indicate the preset condition based on the training status of the model.

In a possible implementation, the first node inputs the preset parameter into the third model, to obtain an output result. The first node sends second information to the second node. The second information indicates that model training is unfulfilled, and the output result does not meet the first threshold. Based on the foregoing solution, when the third model does not meet the preset condition, the first node may send the second information to the second node, to notify the second node that the model training is unfulfilled.

In a possible implementation, the first node inputs a preset parameter into the third model, to obtain an output result. The first node sends the output result to the second node. The first node receives the indication information from the second node, where the indication information indicates the first node to send the second model.

Based on the foregoing solution, depending on the output result sent by the first node, the second node makes a decision and schedules the first node to send the second model. In comparison with a case in which each first node reports the second model, the air interface transmission overheads can be reduced, and a model obtained by the second node through training can be more accurate. This improves model training efficiency.

In a possible implementation, the first model is preset based on at least one of the following: a geographical location of the first node and a task executed by the first node.

Based on the foregoing solution, different first models are preset for first nodes in different geographical environments, so that the first model can be related to the geographical environment, and an output result obtained by using the first model can also be consistent with the geographical environment in which the first node is located. This may improve accuracy of the first model.

In a possible implementation, the first node receives the first information from the second node through a sidelink. Alternatively, the first node receives the first information from the second node through a common channel. Alternatively, the first node receives the first information from the second node through a dedicated channel of the first node.

According to a second aspect, a model scheduling method is provided. The method may be performed by a second node. Optionally, the second node may be a communication device or a chip/chip system. In the method, the second node sends first information to at least one first node, where the first information indicates a first model. The second node receives a second model from the at least one first node, where the second model and the first model are heterogeneous. The first model is used to process the second model, to obtain a third model that has a same structure as the first model. The second node processes the second model to obtain a fourth model. The second node sends the fourth model to the at least one first node.

Based on the foregoing solution, each node may process the second model based on the first model, to obtain the third model. Because structures of third models of all nodes are the same, impact on output results of the third models of the nodes due to different structures of models is reduced. Each node selects, based on evaluation of the third model, whether to send the second model to a central node, so that air interface transmission overheads can be reduced.

In a possible implementation, the first information includes a model index, and the model index indicates the first model. Alternatively, the first information includes a parameter of the first model. In a possible case, the first information may include the model index. The first model may be preset, and each first model may correspond to a model index. In another possible case, the first information may include the parameter of the first model. For example, the first information may include a parameter used to describe the first model. Based on the foregoing solution, the first model is indicated by using the model index, so that the air interface transmission overheads can be greatly reduced. In addition, because the first model is a lightweight model and has a small quantity of parameters, the first model is indicated by using the parameter of the first model. In comparison with a conventional technology, overheads needed for performing transmission of a complete model are small, and air interface utilization can be improved.

In a possible implementation, the second node receives an updated second model from the at least one first node, where the updated second model is obtained based on the fourth model. Based on the foregoing solution, model accuracy may be improved through iterative training.

In a possible implementation, the second node sends a first threshold to the at least one first node, where the first threshold indicates performance of the third model or the first threshold indicates a performance variation of the third model. Based on the foregoing solution, by using the first threshold, the first node evaluates the third model, in other words, evaluates a training status of a model of the first node. When the performance or the performance variation of the third model meets an evaluation parameter, the first node sends the second model to the second node, so that the air interface transmission overheads can be reduced.

In a possible implementation, the second node receives second information from a third node, where the second information indicates that model training is unfulfilled, and the third node is one or more nodes in the at least one first node. Based on the foregoing solution, when the third model does not meet a preset condition, the third node may send the second information to the second node, to notify the second node that the model training is unfulfilled. Optionally, the third node and the first node may be a same node. In other words, the first node may send the second information to the second node when the third model does not meet the preset condition, and the second node may receive the second information from the first node. Alternatively, the third node and the first node may be different nodes. The third node may send the second information to the second node when a third model obtained by processing a second model of the third node based on the first model does not meet the preset condition, and the second node may receive the second information from the third node.

In a possible implementation, the second node receives an output result from the at least one first node, where the output result is an output result of the third model. The second node sends indication information to a fourth node, where the indication information indicates the fourth node to send the second model. The fourth node is one or more nodes that are in the at least one first node and whose output results meet a second threshold. Optionally, the fourth node and the first node may be a same node. In other words, the first node may send the output result to the second node. Alternatively, the fourth node and the first node may be different nodes. In other words, the fourth node may send the output result to the second node.

Based on the foregoing solution, depending on the output result sent by the first node, the second node makes a decision and schedules the first node to send the second model. In comparison with a case in which each first node reports the second model, the air interface transmission overheads can be reduced, and a model obtained by the second node through training can be more accurate. This improves model training efficiency.

In a possible implementation, the first model is preset based on at least one of the following: a geographical location of the first node and a task executed by the first node. Based on the foregoing solution, different first models are preset for first nodes in different geographical environments, so that the first model can be related to the geographical environment, and an output result obtained by using the first model can also be consistent with the geographical environment in which the first node is located. This may improve accuracy of the first model.

In a possible implementation, the second node sends the first information to the at least one first node through a sidelink. Alternatively, the second node sends the first information to the at least one first node through a common channel. Alternatively, the second node separately sends the first information to the at least one first node through a dedicated channel of the at least one first node.

According to a third aspect, a model scheduling method is provided. The method may be performed by a first apparatus. Optionally, the first apparatus may be a communication device or a chip/chip system. In the method, the first apparatus receives I intermediate results from a second apparatus. I is an integer greater than or equal to 1. The I intermediate results are outputs of I first models. Each of the I first models may be obtained by fusing at least one third model. The first apparatus inputs an $i^{th}$ intermediate result into a second model, to obtain an $i^{th}$ first output result. I is an integer greater than or equal to 1, and i is less than or equal to I. The second model matches at least one of a task type of the first apparatus and location information of the first apparatus. The first apparatus determines a reference model in the I first models based on I first output results.

Based on the foregoing solution, the second apparatus may fuse the at least one third model to obtain the first model. The second apparatus may send the I intermediate results of the I first models to the first apparatus, and the first apparatus may determine the reference model based on the I intermediate results. In comparison with sending intermediate results of all third models to the first apparatus, in the foregoing solution, air interface transmission overheads can be reduced.

In a possible implementation, the first apparatus sends first information to the second apparatus, where the first information indicates the reference model. The first apparatus receives second information from the second apparatus, where the second information indicates an intermediate result of at least one target third model. The reference model is obtained by fusing the at least one target third model. The first apparatus separately inputs the intermediate result of the at least one target third model into the second model, to obtain at least one second output result. The first apparatus determines a target model in the at least one target third model based on the at least one second output result. It may be understood that a quantity of target third models is less than a quantity of all the third models. For example, there are Q third models, and Q may be an integer greater than or equal to 2. In this case, the quantity of target third models is less than Q.

Based on the foregoing solution, when determining the reference model, the first apparatus may determine the at least one target third model that is fused to obtain the reference model, and may determine, based on the intermediate result of the at least one target third model from the second apparatus, a target model for executing a task. In comparison with a technical solution in which the second apparatus sends the intermediate results of all the third models to the first apparatus, the air interface transmission overheads can be reduced.

In a possible implementation, the I intermediate results are carried in radio resource control (radio resource control, RRC) signaling. Alternatively, the I intermediate results are carried in a media access control (media access control, MAC) physical resource unit (physical data unit, PDU). Alternatively, the I intermediate results are carried in downlink control information (downlink control information, DCI).

According to a fourth aspect, a model scheduling method is provided. The method may be performed by a second apparatus. Optionally, the second apparatus may be a communication device or a chip/chip system. In the method, the second apparatus groups a third model included in a third model set into I groups. Each third model in the third model set matches at least one of a task type of a first apparatus and location information of the first apparatus. I is an integer greater than or equal to 1. The second apparatus fuses a third model in an $i^{th}$ group, to obtain an $i^{th}$ first model. I is an integer greater than or equal to 1, and i is less than or equal to I. The second apparatus inputs a preset parameter into the $i^{th}$ first model, to obtain an $i^{th}$ intermediate result. The second apparatus sends I intermediate results to the first apparatus. The I intermediate results may be used to determine a reference model in I first models.

Based on the foregoing solution, the second apparatus may group the third model, and fuse a third model in a group to obtain a first model. The second apparatus may send the I intermediate results of the I first models to the first apparatus, to determine the reference model. In comparison with sending intermediate results of all third models to the first apparatus, in the foregoing solution, air interface transmission overheads can be reduced.

In a possible implementation, the second apparatus receives first information from the first apparatus. The first information indicates the reference model, and the reference model is one of the I first models. The reference model may be obtained by fusing at least one target third model. It may be understood that the at least one target third model may be one or more third models in the third model set, and a quantity of the at least one target third model is less than a quantity of all third models included in the third model set. The second apparatus inputs the preset parameter into the at least one target third model, to obtain an intermediate result of the at least one target third model. The second apparatus sends second information to the first apparatus, where the second information includes the intermediate result of the at least one target third model. The intermediate result of the at least one target third model may be used to determine a target model.

Based on the foregoing solution, the second apparatus may send the intermediate result of the at least one target third model to the first apparatus, so that the first model determines, based on the intermediate result of the at least one target third model, a target model for executing a task. In comparison with a technical solution in which the second apparatus sends the intermediate results of all the third models to the first apparatus, the air interface transmission overheads can be reduced.

In a possible implementation, the I intermediate results are carried in RRC signaling. Alternatively, the I intermediate results are carried in a MAC PDU. Alternatively, the I intermediate results are carried in DCI.

According to a fifth aspect, a communication apparatus is provided, and includes a processing unit and a transceiver unit.

The transceiver unit is configured to receive first information from a second node, where the first information indicates a first model. The processing unit is configured to process a second model based on the first model, to obtain a third model. A structure of the third model is the same as a structure of the first model, and the second model and the first model are heterogeneous. The transceiver unit is further configured to send the second model to the second node. The third model meets a preset condition.

In a possible implementation, the first information includes a model index and/or a parameter of the first model.

In a possible implementation, the transceiver unit is further configured to receive information about a fourth model from the second node. The fourth model is obtained by using a second model of at least one first node. The processing unit is further configured to process the fourth model based on the second model of the first node, to obtain a fifth model. A structure of the fifth model is the same as a structure of the second model of the first node. The processing unit is further configured to train the fifth model based on a preset parameter, to obtain an updated second model.

In a possible implementation, the processing unit is further configured to process the updated second model based on a sixth model, to obtain an updated third model. The transceiver unit is further configured to send the updated second model to the second node. The updated third model meets the preset condition. Optionally, the sixth model and the first model may be a same model, or may be different models. The sixth model is indicated by the second node. For example, the transceiver unit may receive indication information of the sixth model from the second node, and the indication information of the sixth model may include a model index and/or a parameter of the sixth model.

In a possible implementation, the preset condition includes a first threshold, and the first threshold indicates performance of the third model or the first threshold indicates a performance variation of the third model.

In a possible implementation, the preset condition is indicated by the second node. Optionally, the preset condition may include the following condition 1 and condition 2. Condition 1: The preset condition includes an evaluation parameter. The evaluation parameter may indicate the performance of the third model, or indicate the performance variation of the third model. Optionally, the evaluation parameter may include the first threshold. Condition 2: The preset condition includes indication information. The first node may receive the indication information from the second node. The indication information may indicate the first node to send the second model. Based on the foregoing solution, the second node may flexibly indicate the preset condition based on a training status of a model.

In a possible implementation, the processing unit is further configured to input the preset parameter into the third model, to obtain an output result. The transceiver unit is further configured to send second information to the second node. The second information indicates that model training is unfulfilled, and the output result does not meet the first threshold.

In a possible implementation, the processing unit is further configured to input a preset parameter into the third model, to obtain an output result. The transceiver unit is further configured to send the output result to the second node. The first node receives the indication information from the second node, where the indication information indicates the first node to send the second model.

In a possible implementation, the first model is preset based on at least one of the following: a geographical location of the first node and a task executed by the first node.

In a possible implementation, the transceiver unit is specifically configured to receive the first information from the second node through a sidelink. Alternatively, the transceiver unit is specifically configured to receive the first information from the second node through a common channel. Alternatively, the transceiver unit is specifically configured to receive the first information from the second node through a dedicated channel of the first node.

According to a sixth aspect, a communication apparatus is provided, and includes a processing unit and a transceiver unit.

The transceiver unit is configured to send first information to at least one first node, where the first information indicates a first model. The transceiver unit is further configured to receive a second model from the at least one first node, where the second model and the first model are heterogeneous. The first model is used to process the second model, to obtain a third model that has a same structure as the first model. The processing unit is configured to process the second model to obtain a fourth model. The second node sends the fourth model to the at least one first node.

In a possible implementation, the first information includes a model index, and the model index indicates the first model. Alternatively, the first information includes a parameter of the first model. In a possible case, the first information may include the model index. The first model may be preset, and each first model may correspond to a model index. In another possible case, the first information may include the parameter of the first model. For example, the first information may include a parameter used to describe the first model.

In a possible implementation, the transceiver unit is further configured to receive an updated second model from the at least one first node, where the updated second model is obtained based on the fourth model.

In a possible implementation, the transceiver unit is further configured to send a first threshold to the at least one first node, where the first threshold indicates performance of the third model or the first threshold indicates a performance variation of the third model.

In a possible implementation, the transceiver unit is further configured to receive second information from a third node, where the second information indicates that model training is unfulfilled, and the third node is one or more nodes in the at least one first node. Optionally, the third node and the first node may be a same node, or the third node and the first node may be different nodes.

In a possible implementation, the transceiver unit is further configured to receive an output result from the at least one first node, where the output result is an output result of the third model. The transceiver unit is further configured to send indication information to a fourth node, where the indication information indicates the fourth node to send the second model. The fourth node is one or more nodes that are in the at least one first node and whose output results meet a second threshold. Optionally, the fourth node and the first node may be a same node, or the fourth node and the first node may be different nodes.

In a possible implementation, the first model is preset based on at least one of the following: a geographical location of the first node and a task executed by the first node.

In a possible implementation, the transceiver unit is specifically configured to send the first information to the at least one first node through a sidelink. Alternatively, the transceiver unit is specifically configured to send the first information to the at least one first node through a common channel. Alternatively, the transceiver unit is specifically configured to separately send the first information to the at least one first node through a dedicated channel of the at least one first node.

According to a seventh aspect, a communication apparatus is provided, and includes a processing unit and a transceiver unit.

The transceiver unit is configured to receive I intermediate results from a second apparatus. I is an integer greater than or equal to 1. The I intermediate results are outputs of I first models. Each of the I first models may be obtained by fusing at least one third model. The processing unit is configured to input an $i^{th}$ intermediate result into a second model, to obtain an $i^{th}$ first output result. I is an integer greater than or equal to 1, and i is less than or equal to I. The second model matches at least one of a task type of a first apparatus and location information of the first apparatus. The processing unit is further configured to determine a reference model in the I first models based on I first output results.

In a possible implementation, the transceiver unit is further configured to send first information to the second apparatus, where the first information indicates the reference model. The reference model is obtained by fusing at least one target third model. The transceiver unit is further configured to receive second information from the second apparatus, where the second information includes an intermediate result of the at least one third model. The processing unit is further configured to separately input the intermediate result of the at least one target third model into the second model, to obtain at least one second output result. The processing unit is further configured to determine a target model in the at least one target third model based on the at least one second output result. It may be understood that a quantity of target third models is less than a quantity of all third models.

In a possible implementation, the I intermediate results are carried in RRC signaling. Alternatively, the I intermediate results are carried in a MAC PDU. Alternatively, the I intermediate results are carried in DCI.

According to an eighth aspect, a communication apparatus is provided, and includes a processing unit and a transceiver unit.

The processing unit is configured to group a third model included in a third model set into I groups. Each third model in the third model set matches at least one of a task type of a first apparatus and location information of the first apparatus. I is an integer greater than or equal to 1. The processing unit is further configured to fuse a third model in an $i^{th}$ group, to obtain an $i^{th}$ first model. I is an integer greater than or equal to 1, and i is less than or equal to I. The processing unit is further configured to input a preset parameter into the $i^{th}$ first model, to obtain an $i^{th}$ intermediate result. The transceiver unit is configured to send I intermediate results to the first apparatus. The I intermediate results may be used to determine a reference model in I first models.

In a possible implementation, the transceiver unit is further configured to receive first information from the first apparatus. The first information indicates the reference model, and the reference model is one of the I first models. The reference model may be obtained by fusing at least one target third model. It may be understood that the at least one target third model may be one or more third models in the third model set, and a quantity of the at least one target third model is less than a quantity of all third models included in the third model set. The processing unit is further configured to input the preset parameter into the at least one target third model, to obtain an intermediate result of the at least one target third model. The transceiver unit is further configured to send second information to the first apparatus, where the second information includes the intermediate result of the at least one target third model. The intermediate result of the at least one target third model may be used to determine a target model.

In a possible implementation, the I intermediate results are carried in RRC signaling. Alternatively, the I intermediate results are carried in a MAC PDU. Alternatively, the I intermediate results are carried in DCI.

The communication apparatus according to any one of the fifth aspect to the eighth aspect may be a communication device or a chip/chip system in a communication device.

According to a ninth aspect, an embodiment of this application provides a communication apparatus. The communication apparatus may be the communication apparatus according to any one of the fifth aspect to the eighth aspect, and may be a communication device or a chip/chip system in a communication device. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first node in any possible implementation of the first aspect, the communication apparatus is enabled to perform the method performed by the second node in any possible implementation of the second aspect, the communication apparatus is enabled to perform the method performed by the first apparatus in any possible implementation of the third aspect, or the communication apparatus is enabled to perform the method performed by the second apparatus in any possible implementation of the fourth aspect.

It should be understood that the communication interface may be implemented by using an antenna, a feeder, a codec, or the like in the communication apparatus. Alternatively, if the communication apparatus is a chip disposed in a communication device at a transmit end or a communication device at a receive end, the communication interface may be an input/output interface of the chip, for example, an input/output pin. The communication apparatus may further include a transceiver, configured to perform communication between the communication apparatus and another device. For example, when the communication apparatus is the first node, the another device is the second node, or when the communication apparatus is the second node, the another device is the first node. For example, when the communication apparatus is the first apparatus, the another device is the second apparatus; or when the communication apparatus is the second apparatus, the another device is the first apparatus.

According to a tenth aspect, this application provides a communication apparatus. The communication apparatus may be the communication apparatus according to any one of the fifth aspect to the eighth aspect, and may be a communication device or a chip/chip system in a communication device. The communication apparatus includes a logic circuit and an input/output interface. The logic circuit may be configured to perform the method performed by the first node in any possible implementation of the first aspect, configured to perform the method performed by the second node in any possible implementation of the second aspect, configured to perform the method performed by the first apparatus in any possible implementation of the third aspect, or configured to perform the method performed by the second apparatus in any possible implementation of the fourth aspect. The input/output interface is configured to perform communication between the communication apparatus and another device. For example, when the communication apparatus is the first node, the another device is the second node, or when the communication apparatus is the second node, the another device is the first node. For example, when the communication apparatus is the first apparatus, the another device is the second apparatus; or when the communication apparatus is the second apparatus, the another device is the first apparatus.

According to an eleventh aspect, an embodiment of this application provides a chip system. The chip system includes a processor, configured to implement the possible implementations of any one of the first aspect to the fourth aspect. In a possible implementation, the chip system further includes a memory, configured to store program instructions and/or data. The chip system may include a chip, or may include a chip and another discrete component.

According to a twelfth aspect, an embodiment of this application provides a communication system. The communication system includes the communication apparatus according to any possible implementation of the fifth aspect and the communication apparatus according to any possible implementation of the sixth aspect.

According to a thirteenth aspect, an embodiment of this application provides a communication system. The communication system includes the communication apparatus according to any possible implementation of the seventh aspect and the communication apparatus according to any possible implementation of the eighth aspect.

According to a fourteenth aspect, this application provides a computer-readable storage medium. The computer-readable storage medium stores a computer program or instructions. When the computer program or the instructions are run, the method performed by the first node, the second node, the first apparatus, or the second apparatus in the foregoing aspects is performed.

According to a fifteenth aspect, a computer program product is provided. The computer program product includes computer program code or instructions. When the computer program code or the instructions are run, the method performed by the first node, the second node, the first apparatus, or the second apparatus in the foregoing aspects is performed.

For beneficial effects of the fifth aspect to the fifteenth aspect and implementations thereof, refer to the descriptions of beneficial effects of the methods according to the first aspect to the fourth aspect and implementations thereof.

BRIEF DESCRIPTION OF DRAWINGS

FIG. 1 is a diagram of a communication system according to an embodiment of this application;
FIG. 2 is a schematic flowchart of federated learning according to an embodiment of this application;
FIG. 3 is an example flowchart of a model scheduling method according to an embodiment of this application;
FIG. 4A and FIG. 4B are an example flowchart of a model scheduling method according to an embodiment of this application;
FIG. 5 is an example flowchart of a model scheduling method according to an embodiment of this application;
FIG. 6 is a diagram of a communication apparatus according to an embodiment of this application;
FIG. 7 is a diagram of a communication apparatus according to an embodiment of this application;
FIG. 8 is a diagram of a communication apparatus according to an embodiment of this application; and
FIG. 9 is a diagram of a communication apparatus according to an embodiment of this application.

DESCRIPTION OF EMBODIMENTS

The technical solutions provided in embodiments of this application are described below with reference to the accompanying drawings.

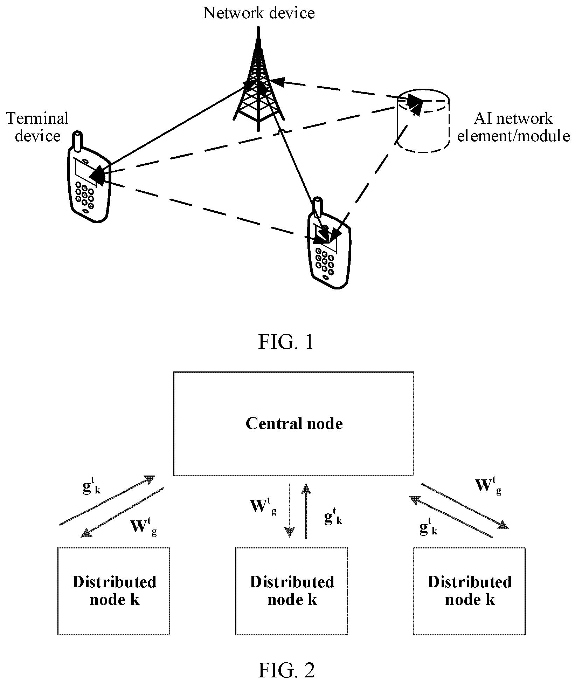

The technical solutions provided in embodiments of this application may be applied to a 4th generation (4th generation, 4G) communication system, for example, a long term evolution (long term evolution, LTE) communication system, may be applied to a 5th generation (5th generation, 5G) communication system, for example, a 5G new radio (new radio, NR) communication system, or may be applied to various communication systems in the future, for example, a 6th generation (6th generation, 6G) communication system. The method provided in embodiments of this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, an internet of things (internet of things, IoT) communication system, a Bluetooth system, a wireless fidelity (Wireless Fidelity, Wi-Fi) system, a long range radio (Long Range Radio, LoRa) system, or an internet of vehicles system. The technical solutions provided in embodiments of this application may be further applied to a satellite communication system, and the satellite communication system may be integrated with the foregoing communication system. FIG. 1 shows a wireless communication system in this application. The wireless communication system may include a cell, each cell includes one or more network devices, and the network device provides a communication service for one or more terminal devices. The wireless communication system may also perform point-to-point communication. For example, terminal devices communicate with each other. Optionally, the wireless communication system may include an artificial intelligence (artificial intelligence, AI) network element, and the AI network element may be configured to provide an AI service. Alternatively, the network device and the terminal device may include an AI module.

The terminal device in this application includes a device that provides a voice and/or data signal connectivity for a user. Specifically, the terminal device includes a device that provides the voice for the user, includes a device that provides the data signal connectivity for the user, or includes the device that provides the voice and the data signal connectivity for the user. For example, the terminal device may include a hand-held device with a wireless connection function or a processing device connected to a wireless modem. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine type communication (machine-to-machine/-machine type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal) device, an access terminal (access terminal) device, a user terminal (user terminal) device, a user agent (user agent), a user device (user device), a satellite, an uncrewed aerial vehicle, a balloon, an aircraft, or the like. For example, the terminal device may include a mobile phone (or referred to as a "cellular" phone), a computer having a mobile terminal device, or a portable, pocket-sized, hand-held, or a computer-embedded mobile apparatus. For example, the terminal device may be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

Terminal devices may be distributed across an entire wireless communication system, and may be stationary or mobile. The terminal device may include a mobile device, a mobile station (mobile station), a mobile unit (mobile unit), a radio unit, a remote unit, a user agent, a mobile client, or the like.

The network device in this application includes, for example, an access network (access network, AN) device, for example, a base station (for example, an access point), and may be a device that is in an access network and that communicates with a wireless terminal device through an air interface in one or more cells. Alternatively, the network device is, for example, a road side unit (road side unit, RSU) in a vehicle-to-everything (vehicle-to-everything, V2X) technology. The network device may include an evolved NodeB (NodeB or eNB or e-NodeB, evolutional NodeB) in a long term evolution (long term evolution, LTE) or long term evolution-advanced (long term evolution-advanced, LTE-A) system, may include a next generation NodeB (next generation NodeB, gNB) in an evolved packet core (evolved packet core, EPC), a 5th generation (5th generation, 5G) mobile communication technology, or a new radio (new radio, NR) system (also referred to as an NR system for short), or may include a central unit (centralized unit, CU) and a distributed unit (distributed unit, DU) in a cloud access network (cloud radio access network, Cloud RAN) system, a satellite, an uncrewed aerial vehicle, a balloon, an aircraft, or the like. This is not limited in embodiments of this application.

The network device may be configured to communicate with the terminal device under control of a network device controller (not shown in FIG. 1). In some embodiments, the network device controller may be a part of a core network (not shown in FIG. 1), or may be integrated into the network device. The network device may perform wireless communication with the terminal device through one or more antennas. Each network device may provide communication coverage for a coverage area corresponding to the network device. The coverage area corresponding to the network device may be divided into a plurality of sectors (sectors). One sector corresponds to a part of the coverage area (not shown in FIG. 1). Network devices may also be connected to each other through a backhaul (blackhaul) link, and the network devices may directly or indirectly communicate with each other. It may be understood that the backhaul link may be a wired communication connection, or may be a wireless communication connection.

The network device may include a network device transceiver station (base transceiver station, BTS), a wireless transceiver, a basic service set (basic service set, BSS), an extended service set (extended service set, ESS), a NodeB, an eNodeB, a gNodeB, and the like.

To cope with the vision of inclusive intelligence in the future, intelligence is further evolved at a wireless network architecture layer, and artificial intelligence (artificial intelligence, AI) is to be deeply integrated with a wireless network. A concept of federated learning (federated learning, FL) is proposed to effectively resolve difficulties in current development of the artificial intelligence. While user data privacy and security are fully ensured, the FL facilitates edge devices and a central-end server to collaborate to efficiently complete learning tasks of a model.

It should be noted that in this application, "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence that is of a plurality of pieces of information and that is pre-agreed on (for example, specified in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitter device by sending configuration information to a receiver device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

FIG. 2 shows an FL architecture most widely used training architecture in a current FL field. A central-end server may be referred to as a central node, for example, the network device shown in FIG. 1, and edge devices may be referred to as distributed nodes, for example, the terminal devices shown in FIG. 1. An FL algorithm procedure is as follows:

(1) The central node initializes a to-be-trained model $w_g^0$, and sends the to-be-trained model to each distributed node by broadcast.

(2) In a $t^{th}$ ($t \in [1, T]$) round, a distributed node $k$ ($k \in [1, K]$) performs E epochs (epochs) of training on a received global model $w_g^{t-1}$ based on a local dataset $\mathcal{D}_k$, to obtain a local training result $w_k^t$, and reports the local training result to the central node. E may be an integer greater than or equal to 1. E may be set based on an empirical value, for example, 1, 2, or 3. This is not specifically limited in this application.

It may be understood that there may be one or more distributed nodes k. In FIG. 2, an example in which there are three distributed nodes k is used for description.

(3) The central node collects and summarizes local training results from all (or some) clients. It is assumed that a set of clients that upload a local model in a $t^{th}$ round is $\mathcal{S}^t$. The central end performs weighted averaging by using a quantity of samples of a corresponding distributed node as a weight, to obtain a new global model. A specific updating rule is

$$w_g^t = \sum_{k \in \mathcal{S}^t} \frac{D_k w_k^t}{\sum_{k \in \mathcal{S}^t} D_k}.$$

. Then, the central node sends a global model $w_g^t$ of a latest version to all distributed nodes by broadcast, to perform a new round of training.

(4) Steps (2) and (3) are repeated, until the model converges finally or a quantity of training rounds reaches an upper limit.

In addition to the local model $w_k^t$, the distributed node may further report a local gradient $g_k^t$ for training. The central node averages local gradients, and updates the global model based on a direction of an average gradient.

It may be learned that, in an FL framework, a dataset exists on the distributed node. To be specific, the distributed node collects a local dataset, performs local training, and reports, to the central node, a local result obtained through training. The central node does not have a dataset, is only responsible for fusing training results of the distributed nodes to obtain a global model, and delivers the global model to the distributed nodes.

However, in a federated learning system, a premise that a plurality of local models can be fused in a weighted averaging manner is that the local models have a same structure and a same quantity of parameters. However, in an actual network, the distributed nodes have different device capabilities, but using a same local model for the distributed nodes typically limits flexibility of the distributed nodes, and different requirements of different distributed nodes cannot be met.

To meet the requirements of the different distributed nodes, local models obtained through training by the distributed nodes may be heterogeneous. The central node may fuse these heterogeneous local models. A typical method for heterogeneous model fusion is to convert models of different structures into a same structure in a knowledge distillation manner, and then perform fusion. Through knowledge distillation, knowledge can be transferred from one network to another, and the two networks may be homogeneous or heterogeneous. The knowledge distillation may be used to convert a large network into a small network and retain performance close to that of the large network. In the knowledge distillation, knowledge learned from a plurality of networks may alternatively be transferred to one network. A specific method of heterogeneous fusion is as follows: The central node first collects heterogeneous models of the distributed nodes, distills the heterogeneous models into homogeneous models, and fuses the homogeneous models. Then, fused homogeneous models are fed back to the distributed nodes. The distributed nodes restore the fused homogeneous models to network structures of the distributed nodes, and start a next round of fusion.

However, in each round of heterogeneous model fusion, each distributed node needs to report a local model. This results in extremely high air interface transmission overheads.

In view of this, an embodiment of this application provides a model scheduling method. In the method, each distributed node may select, through training of a first model, a distributed node that sends a second model to the central node, so that frequency of sending an assisted model by each distributed node can be reduced, the air interface transmission overheads can be reduced, and air interface utilization can be improved.

To facilitate understanding of the technical solutions provided in embodiments of this application, the following models are described.

(1) A first model may be used to evaluate a second model of a first node. For example, the first model is used to process the second model, to obtain a third model that is homogeneous with the second model. The first model and the second model are heterogeneous. The first model may be a lightweight model. In comparison with a complete model (for example, the second model), a quantity of parameters and storage overheads of the first model are less than those of the complete model. For example, a quantity of parameters that need to be input into the first model is small and a structure of the first model is simple. For example, the first model may be a model whose quantity of parameters that need to be input is less than or equal to a first threshold. For another example, the first model may be a model whose quantity of layers is less than a second threshold, or the first model may be a model whose quantity of neurons at each layer is less than a third threshold. It should be noted that the first model may be a convolutional neural network model, a deep learning network model, a recursive neural network model, or the like. A type of the first model is not specifically limited in this application.

(2) A second model may be a local model obtained by each distributed node through training by using a preset parameter, as shown in $w_k^t$ in FIG. 2. Optionally, structures of second models of all distributed nodes may be the same or may be different. Similarly, parameters of the second models of the distributed nodes may be the same or may be different.

Optionally, the second model may be related to a task of the distributed node. For example, when the task of the distributed node includes a channel assessment task, an input of the second model may be a moving speed of location information, or the like, and an output of the second model may be a channel parameter, for example, a quantity of spatial flows, coherence bandwidth, or a multipath delay.

It may be understood that a task that can be executed by the first model is the same as a task that can be executed by the second model.

It should be noted that the second model may be a convolutional neural network model, a deep learning network model, a recursive neural network model, or the like. A type of the second model is not specifically limited in this application.

(3) A third model is obtained by processing the second model based on the first model. The third model and the first model are homogeneous, and the third model and the second model are heterogeneous. It may be understood that structures of third models of the distributed nodes are the same, mainly because structures of first models of the distributed nodes are the same. An implementation of processing the second model based on the first model to obtain the third model is described below.

It may be understood that a task that can be executed by the third model is the same as the task that can be executed by the second model.

It should be noted that the third model may be a convolutional neural network model, a deep learning network model, a recursive neural network model, or the like. A type of the third model is not specifically limited in this application.

(4) A fourth model is obtained based on one or more second models sent by the distributed node. For example, the one or more second models sent by the distributed node may be fused to obtain the fourth model. For another example, one second model may be selected from the one or more second models sent by the distributed node as the fourth model. A manner of obtaining the fourth model is described below.

It may be understood that a task that can be executed by the fourth model is the same as the task that can be executed by the second model.

It should be noted that the fourth model may be a convolutional neural network model, a deep learning network model, a recursive neural network model, or the like. A type of the fourth model is not specifically limited in this application.

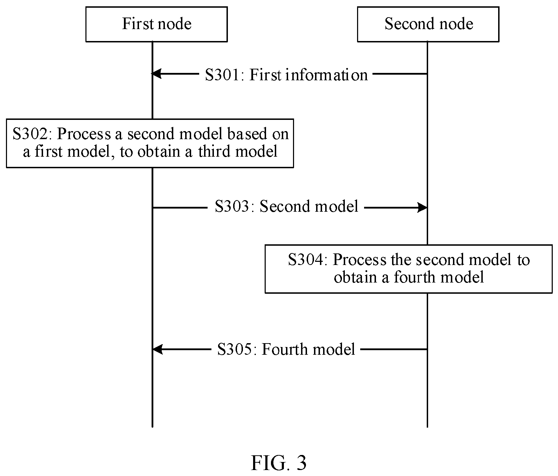

FIG. 3 is an example flowchart of a model scheduling method according to an embodiment of this application. The method may include the following operations. In the method, a second node may be the central node or the distributed node shown in FIG. 2, and a first node may be the distributed node shown in FIG. 2.

S301: The second node sends first information to the first node.

Correspondingly, the first node receives the first information from the second node. Optionally, the second node may send the first information to at least one first node. It may be understood that first information of all first nodes may be the same or different.

In a possible implementation, the first information may indicate a first model. For example, the first information may include a model index and/or a parameter of the first model.

In a possible case, the first information may include the model index. The first model may be preset, and each first model may correspond to a model index. For example, a correspondence between the first model and the model index may be preset. In this way, the first model may be determined by using the model index included in the first information.

For example, a plurality of first models may be preset. For example, a structure of each first model may be preset. For example, a type of each first model, a quantity of layers of each first model, a quantity of neurons included in each layer, a connection manner between neurons, and a weight of a connection between neurons may be set. In addition, a corresponding model index is set for each first model. The first node may determine the first model by using the model index included in the first information, for example, may determine a structure of the first model. Optionally, the first information may further include the parameter of the first model, and the parameter of the first model may be used to describe the structure of the first model. For example, the parameter of the first model may include the type of each first model, the quantity of layers of each first model, the quantity of neurons included in each layer, the connection manner between the neurons, the weight of the connection between the neurons, and the like.

Optionally, the first model may be preset based on a geographical location of the first node. For example, the first model may vary with the geographical location of the first node. For example, the geographical location may include a region formed by a geographical environment like a mountainous region or a city. Alternatively, the geographical location may include a region formed by space in which the first node is located, like a room, a basement, or an outdoor region. In this way, different first models are preset for first nodes in different geographical environments, so that the first model can be related to the geographical environment, and an output result obtained by using the first model can also be consistent with the geographical environment in which the first node is located. This may improve accuracy of the first model.

In another possible case, the first information may include the parameter of the first model. For example, the first information may include a parameter used to describe the first model, for example, a type of the first model, a quantity of layers of the first model, a quantity of neurons included in each layer, a connection manner between neurons, and a weight of a connection between neurons. The first node may determine the first model by using the parameter that is of the first model and that is included in the first information, for example, may determine the structure of the first model.

Based on the foregoing solution, the first model is indicated by using the model index, so that air interface transmission overheads can be greatly reduced. In addition, because the first model is a lightweight model and has a small quantity of parameters, the first model is indicated by using the parameter of the first model. In comparison with a conventional technology, overheads needed for performing transmission of a complete model are small, and air interface utilization can be improved.

It may be understood that the first model may be a model related to a task of the first node. For example, the first node may send task information to the second node, and the second node may determine the task of the first node based on the task information, and determine the first model.

In an example, the second node may send the first information through a downlink common channel. The first node may receive the first information through the common channel. The common channel may be a channel shared by a plurality of first nodes. Optionally, the second node may scramble the first information by using a radio network temporary identity (radio network temporary identity, RNTI). In this way, the first node may attempt to descramble the first information by using an RNTI of the first node. When the first node can descramble the first information by using the RNTI of the first node, the first node may determine the first model based on the first information. Alternatively, the second node may include an identifier of the first node in the first information. In this way, the first node may determine the first information based on the identifier of the first node, and determine the first model based on the first information.

In another example, the second node may send the first information to the first node through a dedicated channel of the first node on a downlink. The dedicated channel is dedicated to the first node. In other words, another node like a third node cannot perform transmission of data with the second node through the dedicated channel of the first node.

In still another example, the second node may send the first information to the first node through a sidelink. For example, the second node is a distributed node, and the first node is also a distributed node. The second node may send the first node to the first node through a sidelink between the second node and the first node.

S302: The first node processes a second model based on the first model, to obtain a third model.

Optionally, the at least one first node may process the second model based on the first model, to obtain the third model.

It may be understood that the first model and the second model are heterogeneous, and a structure of the third model is the same as the structure of the first model. The first node may process the second model to obtain the third model that is homogeneous with the first model. For example, the first node may perform knowledge distillation on the second model based on the first model, to obtain the third model. In other words, the first node may distill knowledge of the second model to the first model. For another example, the first model may be a model of a same type as the second model, the parameter of the first model may include a first indication, and the first indication may indicate a specific connection on the second model that can be deleted. For example, the first indication is 1-bit information. On a connection or a parameter of the first model, if a value of the first indication is 0, it may indicate that the connection or the parameter in a corresponding second model can be deleted. Optionally, on a connection or a parameter of the first model, if a value of the first indication is 1, it may indicate that the connection or the parameter in a corresponding second model cannot be deleted. The second model may be cut into a third model with a smaller quantity of parameters by using the parameter of the first model.

S303: The first node sends the second model to the second node.

Optionally, the at least one first node may send a model to the second node. A third model of the at least one first node meets a preset condition.

For example, the first node may send the second model to the second node when the third model meets the preset condition. Optionally, the preset condition may include the following condition 1 and condition 2.

Condition 1: The preset condition includes an evaluation parameter.

The evaluation parameter may indicate performance of the third model, or indicate a performance variation of the third model. Optionally, the evaluation parameter may include a first threshold. In other words, the first node may send the second model to the second node when the performance of the third model meets the first threshold. Alternatively, the first node may send the second model to the second node when the performance variation of the third model meets the first threshold. It may be understood that the evaluation parameter, for example, the first threshold, may be preset or predefined in a protocol. This is not specifically limited in this application.

In an example, the performance of the third model may be understood as accuracy of an output result of the third model. For example, the first node may input a preset parameter into the third model, to obtain the output result. The preset parameter may be related to the task of the first node. The preset parameter may be a parameter predefined in a protocol. When the accuracy of the output result meets the evaluation parameter, for example, the accuracy is not less than the first threshold, it may be considered that the third model meets the preset condition, and the first node may send the second model to the second node.

A channel assessment task is used as an example for description. In the channel assessment task, an input of the third model may be a parameter predefined in a protocol, for example, predefined location information or a predefined user moving speed. An output of the third model is a channel parameter, including a quantity of spatial flows, coherence bandwidth, a multipath delay, and the like. In the foregoing manner, the output of the third model may be compared with a predefined output, to determine accuracy of the output of the third model, so that the performance of the third model can be determined. Because the third model is obtained by processing the second model, the performance of the third model may reflect performance of the second model. In this way, the performance of the second model may be determined by using a small quantity of parameters and a small calculation amount.

For example, in an image recognition task, the preset parameter may include a group of marked pictures, and the output of the third model may be a picture recognition result. Accuracy of the third model may be obtained by comparing the output of the third model with a mark. For another example, in a channel feedback result compression task, the preset parameter may be a group of channel parameters, and may include channel parameters such as a delay, Doppler, and a quantity of spatial flows. The preset parameter is input into the third model, and then passes through a decompression model. A restored preset parameter is compared with the input preset parameter, to obtain compression accuracy. For another example, in the foregoing channel feedback result compression task, the preset parameter is input into a compression model, and is then decompressed by using the third model. A restored preset parameter is compared with the input preset parameter, to obtain decompression accuracy. It may be understood that, in this embodiment of this application, the second node may perform iterative training on a model. In other words, the first node may send the second model to the second node for a plurality of times. The iterative training is described subsequently. In another example, the performance variation of the third model may be understood as a difference between accuracy of a current output result of the third model and accuracy of a previous output result of the third model. When the difference meets the evaluation parameter, for example, the difference is not less than the first threshold, it may be considered that the third model meets the condition, and the first node may send the second model to the second node.

Optionally, the first node may send second information to the second node. The second information may indicate that model training is unfulfilled, for example, may indicate that training of the third model is unfulfilled. For example, when the output result of the third model does not meet the first threshold, the first node may send the second information to the second node. For example, the first node may send the second information to the second node when the accuracy of the current output result of the third model does not meet the evaluation parameter, for example, the accuracy is less than the first threshold. For another example, the first node may send the second information to the second node when the difference between the accuracy of the current output result of the third model and the accuracy of the previous output result of the third model does not meet the evaluation parameter, for example, the difference is less than the first threshold.

In a possible case, the second information may be a negative acknowledgement (non-acknowledgement, NACK). In another possible case, the second information may be a bit sequence. The bit sequence may be 1 bit, 2 bits, 3 bits, or the like. This is not specifically limited in this application. For example, the second information is 1 bit. When a value of the second information is "0", it may indicate that the model training is unfulfilled, or when a value of the second information is "1", it may be considered that the model training is unfulfilled.

Optionally, the condition 1 may be indicated by the second node, may be predefined in a protocol, or may be preset. This is not specifically limited in this application.

Based on the foregoing solution, the third model is evaluated by using the evaluation parameter, in other words, a training status of a model of the first node is evaluated. When the performance or the performance variation of the third model meets the evaluation parameter, the second model is sent to the second node, so that air interface transmission overheads can be reduced. In addition, because the structure of the third model is the same as the structure of the first model, a quantity of parameters that need to be input into the third model is small and the structure is simple. A calculation process of obtaining the output result based on the third model is simpler than a calculation process of obtaining an output result based on the second model, and requires a shorter time.

Condition 2: The preset condition includes indication information.

The first node may receive the indication information from the second node. The indication information may indicate the first node to send the second model. In other words, the first node may send the second model to the second node when receiving the indication information of the second node.

In an example, the first node may input a preset parameter into the third model, to obtain an output result. The first node may send third information to the second node. The third information may include the output result, or the third information may include quantization of the output result.

It may be understood that the quantization of the output result may be understood as that the first node processes the output result to obtain the quantization of the output result. For example, the first node may determine a level of the output result, and use the level as the quantization of the output result. The level of the output result may be predefined or preset. For example, the level of the output result may be classified into a level 1, a level 2, and a level 3, and each level corresponds to a range of one output result. The first node may determine, based on the output result, a specific range to which the output result belongs, and determine the level corresponding to the output result. The second node may determine, based on the third information, whether the first node needs to be scheduled to send the second model. For example, the second node may send the indication information to the first node when the output result indicated by the third information or the quantization of the output result meets a second threshold. It should be noted that the second threshold may be preset or predefined in a protocol. This is not specifically limited in this application.

Based on the foregoing solution, depending on the third information sent by the first node, the second node makes a decision and schedules the first node to send the second model. In comparison with a case in which each first node reports the second model, the air interface transmission overheads can be reduced, and a model obtained by the second node through training can be more accurate. This improves model training efficiency.

S304: The second node processes the second model to obtain a fourth model.

In a possible case, the second node may fuse the second model to obtain a fourth model. Optionally, the second node may receive a second model from the at least one first node. In a possible case, capabilities of the first nodes are different. Therefore, structures of second models of the first nodes are different. The second node may separately distill knowledge of the second models of the first nodes to models of a same structure, and fuse the models of the same structure to obtain the fourth model. For example, the second node may determine a weight of the models of the same structure, and perform weighted averaging on the models of the same structure to obtain the fourth model.

It should be noted that the foregoing model fusion manner is merely shown as an example, and does not constitute a limitation on a model fusion method in embodiments of this application. In this embodiment of this application, the second models may alternatively be fused in another model fusion manner.

In another possible case, the second node may select one second model from second models as the fourth model, and send the fourth model to the first node. It may be understood that the second node may select, from the second models, a second model with best performance or a best performance variation amount as the fourth model.

S305: The second node sends the fourth model to the first node.

For example, the second node may send information about the fourth model to the first node, where the information about the fourth model may indicate the fourth model. For example, the information about the fourth model may include a parameter of the fourth model. Optionally, the second node may send the fourth model to the at least one first node.

In a possible implementation, the first node may execute a corresponding task based on the fourth model.

For example, the first node may input the preset parameter into the fourth model, to obtain an output result.

In another possible implementation, the first node and the second node may perform iterative training on the fourth model. For example, the first node may process the fourth model based on the second model of the first node, to obtain a fifth model. A structure of the fifth model may be the same as a structure of the second model of the first node. A structure of the fourth model may be the same as or different from the structure of the second model. For example, the first node may distill knowledge of the fourth model to the second model of the first node, to obtain the fifth model. For another example, the first node may cut the second model based on the parameter of the fourth model, to obtain the fifth model. It may be understood that, for a manner in which the first node processes the fourth model based on the second model of the first node, refer to the foregoing manner in which the first node processes the second model of the first node based on the first model. Details are not described herein again.

The first node may train the fifth model based on the preset parameter, to obtain an updated second model. The first node may process the updated second model based on a sixth model. For example, the first node may distill knowledge of the updated second model to the sixth model, to obtain an updated third model. For another example, the first node may cut the fifth model into an updated third model with a smaller quantity of parameters based on a parameter of the sixth model. It may be understood that, for a manner of processing the updated second model based on the sixth model, refer to the manner of processing the second model based on the first model. Details are not described herein again.

Optionally, the sixth model and the first model may be a same model, or may be different models. The sixth model may be indicated by the second node. For example, after S305, the second node may send information about the sixth model to the first node. In other words, in an iterative training process, first models used in all training processes may be the same or may be different.

In a possible case, when the first models used in all the training processes are the same, after S305, the second node may send the information about the sixth model (the same as information about the first model) to the first node or may not send the information about the sixth model. When the first node does not receive the information about the sixth model, the first node may process the fifth model by using the first model, to obtain the updated third model.

In another possible case, when the first models used in all the training processes are different, after S305, the second node may send the information about the sixth model (different from information about the first model) to the first node, and the first node may process the fifth model by using the sixth model, to obtain the updated third model.

When obtaining the updated third model, the first node may return to perform S302, in other words, the first node may send the updated second model to the second node. For example, the first node may send the updated second model to the second node when the updated third model meets the preset condition. In this case, the second node may process the updated second model to obtain an updated fourth model. It may be understood that, for a manner in which the second node obtains the updated fourth model, refer to the foregoing manner in which the second node obtains the fourth model. Details are not described herein again.

Based on the foregoing solution, the first node may select, in each training process based on a requirement, whether to update the first model, so that a fourth model obtained through training can better meet a requirement of the second node. In addition, the first node may evaluate the performance of the second model based on the first model, and determine, based on an evaluation result, whether to send the second model to the second node. Therefore, a second model with poor performance may not be sent to the second node, so that accuracy of the fourth model obtained through the training can be improved.

In a possible implementation, the first node may stop sending the second model to the second node in at least one of the following case 1 and case 2.

Case 1: A quantity of times that the first node sends the second model reaches a specified quantity of times.

The specified quantity of times may be set based on an empirical value, may be predefined in a protocol, may be preconfigured, or may be indicated by the second node.

For example, in an iterative training process, when the quantity of times that the first node sends the second model to the second node reaches 10 times, the first node may not send the second model to the second node in a subsequent training process. Optionally, in an 11th training process, when the first node receives the indication information of the second node, the first node may not send the second model to the second node either. Optionally, the first node may select a fourth model received from the second node in a 10th training process, to execute a corresponding task.

Case 2: Traffic occupied by the first node for sending the second model reaches a specified threshold.

The specified threshold may be set based on an empirical value, may be predefined in a protocol, may be preconfigured, or may be indicated by the second node.

For example, in an iterative training process, when the traffic occupied by the first node for sending the second model to the second node reaches 1G, the first node may not send the second model to the second node in a subsequent training process. Optionally, in the subsequent training process, when the first node receives the indication information of the second node, the first node may not send the second model to the second node either. Optionally, the first node may select a fourth model received from the second node in a latest training process, to execute a corresponding task.

Based on the foregoing solution, when at least one of the foregoing case 1 and case 2 is met, the first node may stop sending the second model to the second node, so that the air interface transmission overheads can be reduced.

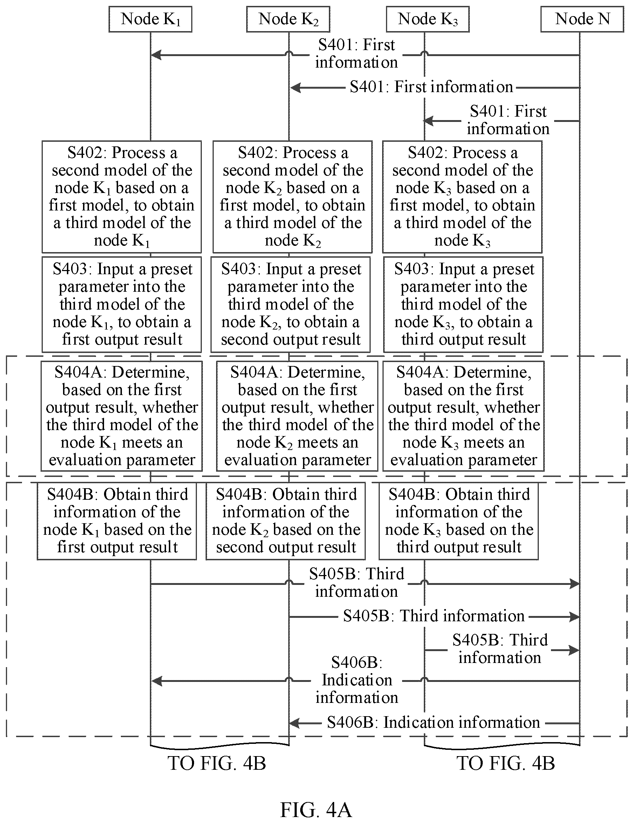

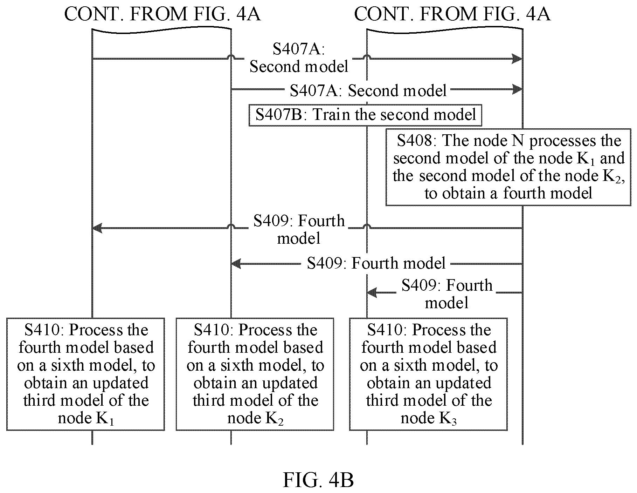

The following describes, with reference to FIG. 4A and FIG. 4B, a model scheduling method provided in an embodiment of this application.

FIG. 4A and FIG. 4B are an example flowchart of a model scheduling method according to an embodiment of this application. The method may include the following operations. In FIG. 4A and FIG. 4B, a node N may be a second node, and a node $K_1$ to a node $K_3$ may be first nodes.

S401: The node N sends first information to the node $K_1$.

Correspondingly, the node $K_1$ receives the first information from the node N.

S401 may be a specific implementation of S301, and may be implemented with reference to S301.

Optionally, the node N may send first information to the node $K_2$ and the node $K_3$. It may be understood that, for a manner in which the node N sends the first information to the node $K_2$ and the node $K_3$, refer to an implementation in which the node N sends the first information to the node $K_1$.

S402: The node $K_1$ processes a second model of the node $K_1$ based on a first model, to obtain a third model of the node $K_1$.

S402 may be a specific implementation of S302, and may be implemented with reference to S302. Optionally, the node $K_2$ processes a second model of the node $K_2$ based on a first model, to obtain a third model of the node $K_2$. Optionally, the node $K_3$ processes a second model of the node $K_3$ based on a first model, to obtain a third model of the node $K_3$.

It may be understood that a manner in which a node $K_m$ processes a second model of the node $K_m$ based on the first model may be implemented in the manner in which the first node processes the second model based on the first model in the embodiment shown in FIG. 3. Details are not described herein again. m is an integer from 1 to 3.

It may be understood that first models of all nodes are the same. For example, first models of the node $K_1$, the node $K_2$, and the node $K_3$ are the same.

S403: The node $K_1$ inputs a preset parameter into the third model of the node $K_1$, to obtain a first output result.

The preset parameter may be related to a task of the node $K_1$. For details, refer to related descriptions of the preset parameter in the embodiment shown in FIG. 3. Details are not described herein again.

Optionally, the node $K_2$ inputs a preset parameter into the third model of the node $K_2$, to obtain a

second output result. Optionally, the node $K_3$ inputs a preset parameter into the third model of the node $K_3$, to obtain a third output result.

In a possible case, the embodiment shown in FIG. 4A and FIG. 4B may include the following operation S404A.

S404A: The node $K_1$ determines, based on the first output result, whether the third model of the node $K_1$ meets an evaluation parameter.

In the embodiment shown in FIG. 4A and FIG. 4B, an example in which the third model of the node $K_1$ and the third model of the node $K_2$ meet the evaluation parameter but the third model of the node $K_3$ does not meet the evaluation parameter is used for description.

For example, when the node $K_1$ determines that accuracy of the first output result is not less than a first threshold, or a difference between accuracy of the first output result and accuracy of a first output result in previous training is not less than a first threshold, S407A may be performed. Similarly, when the node $K_2$ determines that accuracy of the second output result is not less than the first threshold, or a difference between accuracy of the second output result and accuracy of a second output result in previous training is not less than the first threshold, S407A may be performed.

Because the third model of the node $K_3$ does not meet the evaluation parameter, the node $K_3$ may continue to train the second model of the node $K_3$. For example, when the node $K_3$ determines that accuracy of the third output result is less than the first threshold, or a difference between accuracy of the third output result and accuracy of a third output result in previous training is less than the first threshold, the node $K_3$ may perform S407B.

In another possible case, the embodiment shown in FIG. 4A and FIG. 4B may include the following operations S404B to S406B.

S404B: The node $K_1$ obtains third information of the node $K_1$ based on the first output result.

For example, the third information of the node $K_1$ may include the first output result or quantization of the first output result. For the third information, refer to related descriptions of the third information in the embodiment shown in FIG. 3. Details are not described herein again.

Optionally, the node $K_2$ may obtain third information of the node $K_2$ based on the second output result. Optionally, the node $K_3$ may obtain third information of the node $K_3$ based on the third output result.

S405B: The node $K_1$ sends the third information of the node $K_1$ to the node N.

Optionally, the node $K_2$ sends the third information of the node $K_2$ to the node N. Optionally, the node $K_3$ may send the third information of the node $K_3$ to the node N.

S406B: The node N sends indication information to the node $K_1$.

The indication information may indicate the node $K_m$ to send the second model of the node $K_m$. The node N may determine, based on the third informa-

tion of the node $K_1$, whether performance of the third model of the node $K_1$ meets a requirement. For example, the node N may determine whether the first output result or the quantization of the first output result is not less than a second threshold. When the first output result or the quantization of the first output result is not less than the second threshold, it may be considered that the performance of the third model of the node $K_1$ meets the requirement.

Optionally, the node N may determine, based on the third information of the node $K_2$, whether performance of the third model of the node $K_2$ meets the requirement. Optionally, the node N may determine, based on the third information of the node $K_3$, whether performance of the third model of the node $K_3$ meets the requirement.

In this embodiment of this application, an example in which the performance of the third model of the node $K_1$ and the performance of the third model of the node $K_2$ meet the requirement is used for description. The node N may send the indication information to the node $K_1$ and the node $K_2$.

S407A: The node $K_1$ sends the second model of the node $K_1$ to the node N.

Optionally, the node $K_2$ may send the second model of the node $K_2$ to the node N.

S407B: Train the second model.

For example, the node $K_3$ may continue to train the second model of the node $K_3$ based on a predefined parameter.

S408: The node N processes the second model of the node $K_1$ and the second model of the node $K_2$, to obtain a fourth model.

S408 may be a specific implementation of S304. For implementation, refer to S304. Details are not described herein again.

For example, the node N may distill knowledge of the second model of the node $K_1$ to a model A. Similarly, the node N may distill knowledge of the second model of the node $K_2$ to a model A. The node N may fuse the two models A, for example, may perform weighted averaging on the two models A, to obtain the fourth model.

For another example, the node N may select one of the second model of the node $K_1$ and the second model of the node $K_2$ as the fourth model.

S409: The node N sends the fourth model to the node $K_1$.

S409 may be a specific implementation of S305. For implementation, refer to S305. Details are not described herein again.

Optionally, the node N may send the fourth model to the node $K_2$. Optionally, the node N may send the fourth model to the node $K_3$.

Based on S401 to S409, each node completes 1st training. In this embodiment of this application, two times of training are used as an example for description. The embodiment shown in FIG. 4A and FIG. 4B may further include the following operations.

S410: The node $K_1$ processes the fourth model based on a sixth model, to obtain an updated third model of the node $K_1$.

In a possible case, the sixth model may be indicated by the node N. It may be understood that, for an indication manner of the sixth model, refer to S401 for implementation. For example, before S410, the node N may send information about the sixth model to the node $K_1$. In another possible case, the sixth model and the first model may be a same model. In other words, in S410, the node $K_1$ may process the fourth model based on the first model, to obtain the updated third model of the node $K_1$.

Optionally, the node $K_2$ processes the fourth model based on a sixth model, to obtain an updated third model of the node $K_2$. Optionally, the node $K_3$ processes the fourth model based on a sixth model, to obtain an updated third model of the node $K_3$.

It may be understood that sixth models of all the nodes are the same. For example, sixth models of the node $K_1$, the node $K_2$, and the node $K_3$ are the same.

In a 2nd training process, after the node $K_1$, the node $K_2$, and the node $K_3$ each obtain the updated third model, each node may return to perform 403 to S409.

Based on the embodiment shown in FIG. 4A and FIG. 4B, each node may process the second model based on the first model, to obtain the third model. Because structures of third models of all the nodes are the same, impact on output results of the third models of the nodes, due to different structures of models is reduced. Each node selects, based on evaluation of the third model, whether to send the second model to a central node, so that air interface transmission overheads can be reduced.

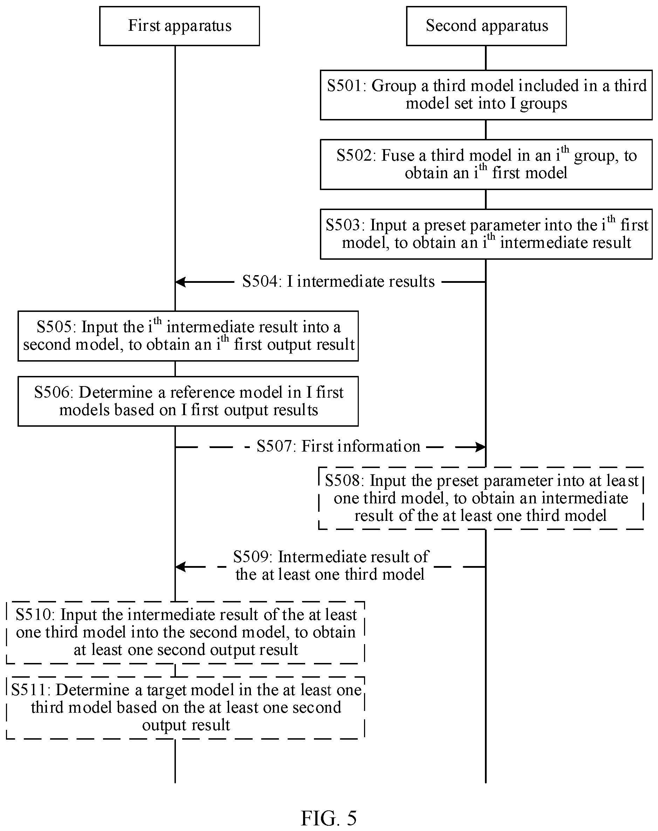

An embodiment of this application further provides another model scheduling method. FIG. 5 is an example flowchart of a model scheduling method according to an embodiment of this application. The method may include the following operations. In the embodiment shown in FIG. 5, a first apparatus may be a terminal device or a network device. Similarly, a second apparatus may be a terminal device or a network device.

It should be noted that information mentioned below and the information mentioned above are different information. Different information is not necessarily understood as that content of the information is different, but is understood as that the information is reordered. Similarly, a model mentioned below and the model mentioned above are different models. Different models are not necessarily understood as that parameters and structures of the models are different, but are understood as that the models are reordered.

S501: The second apparatus groups a third model included in a third model set into I groups.

I is an integer greater than or equal to 1. The third model included in the third model set may match a parameter like a task type of the first apparatus and/or location information of the first apparatus. Optionally, the second apparatus may receive the parameter like the task type of the first apparatus and/or the location information of the first apparatus from the first apparatus.

For example, the third model set may include eight models: a third model 1 to a third model 8. The second apparatus may divide the eight models into two groups. A first group includes the third model 1 to the third model 4, and a second group includes the third model 5 to the third model 8.

It may be understood that the second apparatus may randomly group the third model included in the third model set into the I groups.

S502: The second apparatus fuses a third model in an $i^{th}$ group, to obtain an $i^{th}$ first model.

I is an integer greater than or equal to 1 and less than or equal to I. Optionally, i is an integer from 1 to I. For example, the second apparatus may perform weighted averaging on the third model in the $i^{th}$ group, to obtain the $i^{th}$ first model. It may be understood that the foregoing weighted averaging is merely shown as an example of fusing a model, and does not constitute a limitation on a manner in which the second apparatus fuses the third model in this embodiment of this application.

It may be understood that structures of third models in the $i^{th}$ group may be the same, or at least one third model in the third models in the $i^{th}$ group is heterogeneous. When the at least one third model is heterogeneous, the second apparatus may separately distill knowledge of each third model to a model, and fuse each model.

For example, the second apparatus may fuse the third model 1 to the third model 4, to obtain a first model 1. The second apparatus may fuse the third model 5 to the third model 8, to obtain a first model 2.

S503: The second apparatus inputs a preset parameter into the $i^{th}$ first model, to obtain an $i^{th}$ intermediate result.

The preset parameter may match the parameter like the task type of the first apparatus and/or the location information of the first apparatus. The preset parameter may be predefined in a protocol. For details, refer to related descriptions of the preset parameter in the embodiment shown in FIG. 3. Details are not described herein again.

For example, the second apparatus may input the preset parameter into the first model 1, to obtain an intermediate result 1. The second apparatus may input the preset parameter into the first model 2, to obtain an intermediate result 2.

S504: The second apparatus sends I intermediate results to the first apparatus.

Correspondingly, the first apparatus may receive the I intermediate results from the second apparatus.

For example, the second apparatus may send the intermediate result 1 to the first apparatus, and send the intermediate result 2 to the first apparatus.

In a possible implementation, the I intermediate results may be sent to the first apparatus by using an RRC message, a MAC PDU, or DCI.

S505: The first apparatus inputs the $i^{th}$ intermediate result into a second model, to obtain an $i^{th}$ first output result.

The second model may be a model trained by the first apparatus. The second model matches the parameter like the task type of the first apparatus and/or the location information of the first apparatus.

For example, the first apparatus may input the intermediate result 1 into the second model, to obtain a first output result 1. The first apparatus may input the intermediate result 2 into the second model, to obtain a first output result 2.

S506: The first apparatus determines a reference model in I first models based on I first output results.

The first apparatus may select a first output result with highest accuracy from the I first output results. A first model corresponding to the first output result is used as the reference model. It may be understood that the first output result with the highest accuracy may be a first output result with a largest value. It may be understood that for a manner of determining accuracy of a model, refer to related descriptions in the embodiment shown in FIG. 3. Details are not described herein again.

For example, the first apparatus may select a first output result with highest accuracy from the first output result 1 and the first output result 2. It is assumed that accuracy of the first output result 1 is greater than accuracy of the first output result 2, that is, the first apparatus may determine that the first model 1 is the reference model.

Based on the foregoing solution, the second apparatus may group a plurality of third models, and fuse a third model in a group to obtain a first model. The second apparatus may send the I intermediate results of the I first models to the first apparatus, to determine the reference model. In comparison with sending intermediate results of the plurality of third models to the first apparatus, in the foregoing solution, air interface transmission overheads can be reduced.

Optionally, the embodiment shown in FIG. 5 may further include the following operations.

S507: The first apparatus sends first information to the second apparatus.

Correspondingly, the second apparatus receives the first information from the first apparatus.

The first information indicates the reference model. For example, the first information may indicate information about a group of the reference model. For example, the first information may indicate the first model 1. The reference model may be obtained by fusing at least one target third model. In this specification, the reference model may be the first model 1, and the at least one target third model may include the third model 1, the third model 2, the third model 3, and the third model 4.

S508: The second apparatus inputs the preset parameter into the at least one target third model, to obtain an intermediate result of the at least one target third model.

For example, the second apparatus may separately input the preset parameter into the third model 1 to the third model 4, to obtain an intermediate result of the third model 1, an intermediate result of the third model 2, an intermediate result of the third model 3, and an intermediate result of the third model 4.

S509: The second apparatus sends the intermediate result of the at least one target third model to the first apparatus.

Correspondingly, the first apparatus may receive the intermediate result of the at least one target third model from the second apparatus.

For example, the second apparatus may send the intermediate result of the third model 1, the intermediate result of the third model 2, the intermediate result of the third model 3, and the intermediate result of the third model 4 to the first apparatus.

Optionally, the second apparatus may send the intermediate result of the at least one third model to the first apparatus by using an RRC message, a MAC PDU, or DCI.

S510: The first apparatus inputs the intermediate result of the at least one target third model into the second model, to obtain at least one second output result.

For example, the first apparatus may input the intermediate result of the third model 1 into the second model, to obtain a second output result 1; input the intermediate result of the third model 2 into the second model, to obtain a second output result 2; input the intermediate result of the third model 3 into the second model, to obtain a second output result 3; and input the intermediate result of the third model 4 into the second model, to obtain a second output result 4.

S511: The first apparatus determines a target model in the at least one target third model based on the at least one second output result.

For example, the first apparatus may determine a second output result with highest accuracy from the at least one second output result, and use, as the target model, a target third model corresponding to the second output result with the highest accuracy.

For example, the first apparatus may determine a second output result with highest accuracy from the second output result 1, the second output result 2, the second output result 3, and the second output result 4. Assuming that accuracy of the second output result 2 is the highest, the first apparatus may use the third model 2 as the target model.

Optionally, the target model may be an initial status model used for training, or may be used only as an initial model structure used for training. The first apparatus may train the target model based on the preset parameter, to obtain a model for executing a corresponding task.

In a possible implementation, when the second apparatus receives the first information, the second apparatus may use, as a new third model set, a group of third models corresponding to the reference model indicated by the first information, and return to perform S501, until a quantity of third models included in the group corresponding to the reference model is less than a preset threshold. It may be understood that the preset threshold may be set based on an empirical value, for example, may be 2, 3, 4, or 5. This is not specifically limited in this application.

In a possible case, the second apparatus may not group the third model in the third model set, but send an intermediate result of the third model to the first apparatus. The first apparatus may input the intermediate result of the third model into the second model, to obtain a plurality of output results. The first apparatus may determine the target model based on the plurality of output results.

However, in the foregoing solution, the second apparatus needs to send a large quantity of intermediate results. Consequently, the air interface transmission overheads are extremely high. Based on the solution shown in FIG. 5, the second apparatus groups the third model, and fuses the third model in the group to obtain the first model, so that a quantity of intermediate results sent by the second apparatus to the first apparatus can be reduced, and the air interface transmission overheads can be reduced.

The following describes a communication apparatus for implementing the foregoing method in embodiments of this application with reference to the accompanying drawings. Therefore, all the foregoing content may be used in the following embodiments. Repeated content is not described again.

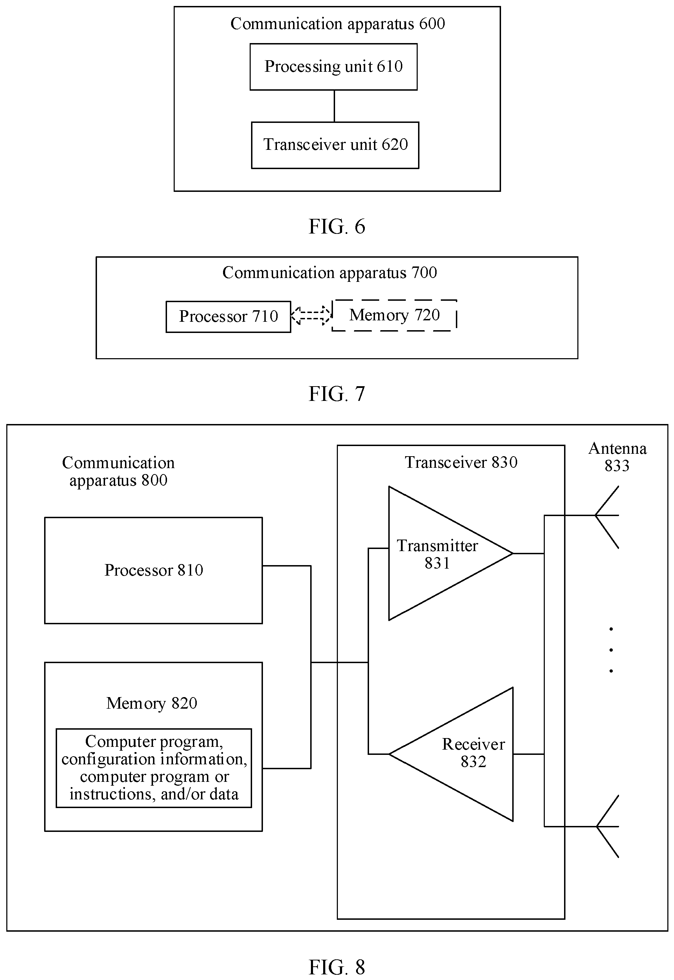

FIG. 6 is a block diagram of a communication apparatus 600 according to an embodiment of this application. The communication apparatus 600 may correspondingly implement functions or steps implemented by the first node, the second node, the first apparatus, or the second apparatus in the foregoing method embodiments. The communication apparatus may include a processing unit 610 and a transceiver unit 620. Optionally, the communication apparatus may further include a storage unit. The storage unit may be configured to store instructions (code or a program) and/or data. The processing unit 610 and the transceiver unit 620 may be coupled to the storage unit. For example, the processing unit 610 may read the instructions (the code or the program) and/or the data in the storage unit, to implement a corresponding method. The foregoing units may be disposed independently, or may be partially or completely integrated.

In some possible implementations, the communication apparatus 600 can correspondingly implement behavior and functions of the first node in the foregoing method embodiments. For example, the communication apparatus 600 may be the first node, or may be a component (for example, a chip or a circuit) used in the first node. The transceiver unit 620 may be configured to perform all receiving or sending operations performed by the first node in the embodiment shown in FIG. 3, for example, S301 and S303 in the embodiment shown in FIG. 3, and/or another process used to support the technology described in this specification. The processing unit 610 is configured to perform all operations performed by the first node in the embodiment shown in FIG. 3 except receiving and sending operations, for example, S302 in the embodiment shown in FIG. 3, and/or another process used to support the technology described in this specification.

The transceiver unit 620 is configured to receive first information from a second node, where the first information indicates a first model. The processing unit 610 is configured to process a second model based on the first model, to obtain a third model. A structure of the third model is the same as a structure of the first model, and the second model and the first model are heterogeneous. The transceiver unit 620 is further configured to send the second model to the second node. The third model meets a preset condition.

In a possible implementation, the transceiver unit 620 is further configured to receive information about a fourth model from the second node. The fourth model is obtained by using a second model of at least one first node. The processing unit 610 is further configured to process the fourth model based on the second model of the first node, to obtain a fifth model. A structure of the fifth model is the same as a structure of the second model of the first node. The processing unit 610 is further configured to train the fifth model based on a preset parameter, to obtain an updated second model.

In a possible implementation, the processing unit 610 is further configured to process the updated second model based on a sixth model, to obtain an updated third model. The sixth model is indicated by the second node. The transceiver unit 620 is further configured to send the updated second model to the second node. The updated third model meets the preset condition.

In a possible implementation, the processing unit 610 is further configured to input the preset parameter into the third model, to obtain an output result. The transceiver unit 620 is further configured to send second information to the second node. The second information indicates that model training is unfulfilled, and the output result does not meet a first threshold.

In a possible implementation, the processing unit 610 is further configured to input a preset parameter into the third model, to obtain an output result. The transceiver unit 620 is further configured to send the output result to the second node. The first node receives indication information from the second node, where the indication information indicates the first node to send the second model.

In a possible implementation, the transceiver unit 620 is specifically configured to receive the first information from the second node through a sidelink.

Alternatively, the transceiver unit 620 is specifically configured to receive the first information from the second node through a common channel. Alternatively, the transceiver unit 620 is specifically configured to receive the first information from the second node through a dedicated channel of the first node.

In some possible implementations, the communication apparatus 600 can correspondingly implement behavior and functions of the second node in the foregoing method embodiments. For example, the communication apparatus 600 may be the second node, or may be a component (for example, a chip or a circuit) used in the second node. The transceiver unit 620 may be configured to perform all receiving or sending operations performed by the second node in the embodiment shown in FIG. 3, for example, S301 and S303 in the embodiment shown in FIG. 3, and/or another process used to support the technology described in this specification. The processing unit 610 is configured to perform all operations performed by the second node in the embodiment shown in FIG. 3 except receiving and sending operations, for example, S304 in the embodiment shown in FIG. 3, and/or another process used to support the technology described in this specification.

The transceiver unit 620 is configured to send first information to at least one first node, where the first information indicates a first model. The transceiver unit 620 is further configured to receive a second model from the at least one first node, where the second model and the first model are heterogeneous. The first model is used to process the second model, to obtain a third model that has a same structure as the first model. The processing unit 610 is configured to process the second model to obtain a fourth model. The second node sends the fourth model to the at least one first node.

In a possible implementation, the transceiver unit 620 is further configured to receive an updated second model from the at least one first node, where the updated second model is obtained based on the fourth model.

In a possible implementation, the transceiver unit 620 is further configured to send a first threshold to the at least one first node, where the first threshold indicates performance of the third model or the first threshold indicates a performance variation of the third model.

In a possible implementation, the transceiver unit 620 is further configured to receive second information from a third node, where the second information indicates that model training is unfulfilled, and the third node is one or more nodes in the at least one first node.

In a possible implementation, the transceiver unit 620 is further configured to receive an output result from the at least one first node, where the output result is an output result of the third model. The transceiver unit 620 is further configured to send indication information to a fourth node, where the indication information indicates the fourth node to send the second model. The fourth node is one or more nodes that are in the at least one first node and whose output results meet a second threshold.

In a possible implementation, the transceiver unit 620 is specifically configured to send the first information to the at least one first node through a sidelink. Alternatively, the transceiver unit 620 is specifically configured to send the first information to the at least one first node through a common channel. Alternatively, the transceiver unit 620 is specifically configured to separately send the first information to the at least one first node through a dedicated channel of the at least one first node.

In some possible implementations, the communication apparatus 600 can correspondingly implement behavior and functions of the first apparatus in the foregoing method embodiments. For example, the communication apparatus 600 may be the first apparatus, or may be a component (for example, a chip or a circuit) used in the first apparatus. The transceiver unit 620 may be configured to perform all receiving or sending operations performed by the first apparatus in the embodiment shown in FIG. 5, for example, S504 in the embodiment shown in FIG. 5, and/or another process used to support the technology described in this specification. The processing unit 610 is configured to perform all operations performed by the first apparatus in the embodiment shown in FIG. 5 except receiving and sending operations, for example, S505 and S506 in the embodiment shown in FIG. 5, and/or another process used to support the technology described in this specification.

The transceiver unit 620 is configured to receive I intermediate results from a second apparatus. I is an integer greater than or equal to 1. The I intermediate results are outputs of I first models. Each of the I first models may be obtained by fusing at least one third model. The processing unit 610 is configured to input an $i^{th}$ intermediate result into a second model, to obtain an $i^{th}$ first output result. I is an integer greater than or equal to 1, and i is less than or equal to I. The second model matches at least one of a task type of the first apparatus and location information of the first apparatus. The processing unit 610 is further configured to determine a reference model in the I first models based on I first output results.

In a possible implementation, the transceiver unit 620 is further configured to send first information to the second apparatus, where the first information indicates the reference model. The reference model is obtained by fusing at least one target third model. The transceiver unit 620 is further configured to receive second information from the second apparatus, where the second information includes an intermediate result of the at least one target third model. The processing unit 610 is further configured to separately input the intermediate result of the at least one target third model into the second model, to obtain at least one second output result. The processing unit 610 is further configured to determine a target model in the at least one target third model based on the at least one second output result.

In some possible implementations, the communication apparatus 600 can correspondingly implement behavior and functions of the second apparatus in the foregoing method embodiments. For example, the communication apparatus 600 may be the second apparatus, or may be a component (for example, a chip or a circuit) used in the second apparatus. The transceiver unit 620 may be configured to perform all receiving or sending operations performed by the second apparatus in the embodiment shown in FIG. 5, for example, S501 in the embodiment shown in FIG. 5, and/or another process used to support the technology described in this specification. The processing unit 610 is configured to perform all operations performed by the second apparatus in the embodiment shown in FIG. 5 except receiving and sending operations, for example, S501, S502, and S503 in the embodiment shown in FIG. 5, and/or another process used to support the technology described in this specification.

The processing unit 610 is configured to group a third model included in a third model set into I groups. Each third model in the third model set matches at least one of a task type of a first apparatus and location information of the first apparatus. I is an integer greater than or equal to 1. The processing unit 610 is further configured to fuse a third model in an $i^{th}$ group, to obtain an $i^{th}$ first model. I is an integer greater than or equal to 1, and i is less than or equal to I. The processing unit 610 is further configured to input a preset parameter into the $i^{th}$ first model, to obtain an $i^{th}$ intermediate result. The transceiver unit 620 is configured to send I intermediate results to the first apparatus. The I intermediate results may be used to determine a reference model in I first models.

In a possible implementation, the transceiver unit 620 is further configured to receive first information from the first apparatus. The first information indicates the reference model, and the reference model is one of the I first models. The reference model may be obtained by fusing at least one target third model. The processing unit 610 is further configured to input the preset parameter into the at least one target third model, to obtain an intermediate result of the at least one target third model. The transceiver unit 620 is further configured to send second information to the first apparatus, where the second information includes the intermediate result of the at least one target third model. The intermediate result of the at least one target third model may be used to determine a target model.

For operations performed by the processing unit 610 and the transceiver unit 620, refer to the related descriptions in the foregoing method embodiments.

It should be understood that the processing unit 610 in this embodiment of this application may be implemented by a processor or a processor-related circuit component, and the transceiver unit 620 may be implemented by a transceiver, a transceiver-related circuit component, or a communication interface.

Based on a same concept, as shown in FIG. 7, an embodiment of this application provides a communication apparatus 700. The communication apparatus 700 includes a processor 710. Optionally, the communication apparatus 700 may further include a memory 720, configured to store instructions executed by the processor 710, input data needed by the processor 710 to run instructions, or data generated after the processor 710 runs instructions. The processor 710 may implement the methods shown in the foregoing method embodiments by using the instructions stored in the memory 720.

Based on a same concept, as shown in FIG. 8, an embodiment of this application provides a communication apparatus 800. The communication apparatus 800 may be a chip or a chip system. Optionally, in this embodiment of this application, the chip system may include a chip, or may include a chip and another discrete device.

The communication apparatus 800 may include at least one processor 810. The processor 810 is coupled to a memory. Optionally, the memory may be located inside the apparatus, or may be located outside the apparatus. For example, the communication apparatus 800 may further include at least one memory 820. The memory 820 stores a computer program, configuration information, a computer program or instructions, and/or data necessary for implementing any one of the foregoing embodiments. The processor 810 may execute the computer program stored in the memory 820, to complete the method in any one of the foregoing embodiments.

A coupling in this embodiment of this application may be an indirect coupling or a communication connection between apparatuses, units, or modules in an electrical form, a mechanical form, or another form, and is used for information exchange between the apparatuses, the units, or the modules. The processor 810 may cooperate with the memory 820. A specific connection medium between a transceiver 830, the processor 810, and the memory 820 is not limited in this embodiment of this application.

The communication apparatus 800 may further include the transceiver 830, and the communication apparatus 800 may exchange information with another device via the transceiver 830. The transceiver 830 may be a circuit, a bus, a transceiver, or any other apparatus that can be configured to exchange information, or is referred to as a signal transceiver unit. As shown in FIG. 8, the transceiver 830 includes a transmitter 831, a receiver 832, and an antenna 833. In addition, when the communication apparatus 800 is a chip type apparatus or circuit, the transceiver in the communication apparatus 800 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the communication apparatus 800 may be used in a first node. Specifically, the communication apparatus 800 may be the first node, or may be an apparatus that can support the first node and implement a function of the first node in any one of the foregoing embodiments. The memory 820 stores a computer program, a computer program or instructions, and/or data necessary for implementing a function of the first node in any one of the foregoing embodiments. The processor 810 may execute the computer program stored in the memory 820, to complete the method performed by the first node in any one of the foregoing embodiments. When used in the first node, the transmitter 831 in the communication apparatus 800 may be configured to send a second model through the antenna 833.

In another possible implementation, the communication apparatus 800 may be used in a second node. Specifically, the communication apparatus 800 may be the second node, or may be an apparatus that can support the second node and implement a function of the second node in any one of the foregoing embodiments. The memory 820 stores a computer program, a computer program or instructions, and/or data necessary for implementing a function of the second node in any one of the foregoing embodiments. The processor 810 may execute the computer program stored in the memory 820, to complete the method performed by the second node in any one of the foregoing embodiments. When used in the second node, the transmitter 831 in the communication apparatus 800 may be configured to send first information through the antenna 833.

In another possible implementation, the communication apparatus 800 may be used in a first apparatus. Specifically, the communication apparatus 800 may be the first apparatus, or may be an apparatus that can support the first apparatus and implement a function of the first apparatus in any one of the foregoing embodiments. The memory 820 stores a computer program, a computer program or instructions, and/or data necessary for implementing a function of the first apparatus in any one of the foregoing embodiments. The processor 810 may execute the computer program stored in the memory 820, to complete the method performed by the first apparatus in any one of the foregoing embodiments. When used in the first apparatus, the receiver 832 in the communication apparatus 800 may be configured to receive I intermediate results through the antenna 833.

In another possible implementation, the communication apparatus 800 may be used in a second apparatus. Specifically, the communication apparatus 800 may be the second apparatus, or may be an apparatus that can support the second apparatus and implement a function of the second apparatus in any one of the foregoing embodiments. The memory 820 stores a computer program, a computer program or instructions, and/or data necessary for implementing a function of the second apparatus in any one of the foregoing embodiments. The processor 810 may execute the computer program stored in the memory 820, to complete the method performed by the second apparatus in any one of the foregoing embodiments. When used in the second apparatus, the transmitter 831 in the communication apparatus 800 may be configured to send I intermediate results through the antenna 833.

The communication apparatus 800 provided in this embodiment may be used in the first node to complete the method performed by the first node, used in the second node to complete the method performed by the second node, used in the first apparatus to complete the method performed by the first apparatus, or used in the second apparatus to complete the method performed by the second apparatus. Therefore, for technical effects that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

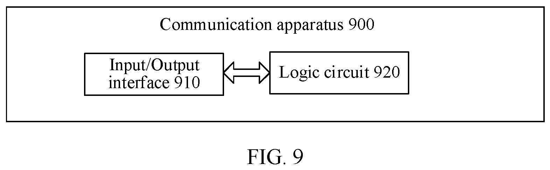

Based on the foregoing embodiments, refer to FIG. 9. An embodiment of this application further provides another communication apparatus 900, including an input/output interface 910 and a logic circuit 920. The input/output interface 910 is configured to: receive code instructions, and perform transmission of the code instructions to the logic circuit 920. The logic circuit 920 is configured to run the code instructions to perform the method performed by the first node, the second node, the first apparatus, or the second apparatus in any one of the foregoing embodiments.

The following describes in detail operations performed by the communication apparatus when the communication apparatus is used in the first node, the second node, the first apparatus, or the second apparatus.

In an optional implementation, the communication apparatus 900 may be used in the first node, to perform the method performed by the first node, specifically, for example, the method performed by the first node in the embodiment shown in FIG. 3.

For example, the input/output interface 910 is configured to input first information from a second node, where the first information indicates a first model. The logic circuit 920 is configured to process a second model based on the first model, to obtain a third model. A structure of the third model is the same as a structure of the first model, and the second model and the first model are heterogeneous. The input/output interface 910 is further configured to output the second model to the second node. The third model meets a preset condition.

In another optional implementation, the communication apparatus 900 may be used in the second node, to perform the method performed by the second node, specifically, for example, the method performed by the second node in the embodiment shown in FIG. 3.

For example, the input/output interface 910 is configured to output first information to at least one first node, where the first information indicates a first model. The input/output interface 910 is further configured to input a second model from the at least one first node, where the second model and the first model are heterogeneous. The first model is used to process the second model, to obtain a third model that has a same structure as the first model. The logic circuit 920 is configured to process the second model to obtain a fourth model. The second node outputs the fourth model to the at least one first node.

In another optional implementation, the communication apparatus 900 may be used in the first apparatus, to perform the method performed by the first apparatus, specifically, for example, the method performed by the first apparatus in the embodiment shown in FIG. 5.

For example, the input/output interface 910 is configured to input I intermediate results from a second apparatus. I is an integer greater than or equal to 1. The I intermediate results are outputs of I first models. Each of the I first models may be obtained by fusing at least one third model. The logic circuit 920 is configured to input an $i^{th}$ intermediate result into a second model, to obtain an $i^{th}$ first output result. I is an integer greater than or equal to 1, and i is less than or equal to I. The second model matches at least one of a task type of the first apparatus and location information of the first apparatus. The logic circuit 920 is further configured to determine a reference model in the I first models based on I first output results.

In another optional implementation, the communication apparatus 900 may be used in the second apparatus, to perform the method performed by the second apparatus, specifically, for example, the method performed by the second apparatus in the embodiment shown in FIG. 5.

For example, the logic circuit 920 is configured to group a third model included in a third model set into I groups. Each third model in the third model set matches at least one of a task type of a first apparatus and location information of the first apparatus. I is an integer greater than or equal to 1. The logic circuit 920 is further configured to fuse a third model in an $i^{th}$ group, to obtain an $i^{th}$ first model. I is an integer greater than or equal to 1, and i is less than or equal to I. The logic circuit 920 is further configured to input a preset parameter into the $i^{th}$ first model, to obtain an $i^{th}$ intermediate result. The input/output interface 910 is configured to output I intermediate results to the first apparatus. The I intermediate results may be used to determine a reference model in I first models.

The communication apparatus 900 provided in this embodiment may be used in the first node to complete the method performed by the first node, used in the second node to complete the method performed by the second node, used in the first apparatus to complete the method performed by the first apparatus, or used in the second apparatus to complete the method performed by the second apparatus. Therefore, for technical effects that can be achieved by this embodiment, refer to the foregoing method embodiments. Details are not described herein again.

Based on the foregoing embodiments, an embodiment of this application further provides a communication system. The communication system includes at least one communication apparatus used in a first node and at least one communication apparatus used in a second node. For technical effect that can be achieved by this embodiment, refer to the foregoing method embodiments. Details are not described herein again.

Based on the foregoing embodiments, an embodiment of this application further provides a communication system. The communication system includes at least one communication apparatus used in a first apparatus and at least one communication apparatus used in a second apparatus. For technical effect that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the first node in any one of the foregoing embodiments is implemented, the method performed by the second node in any one of the foregoing embodiments is implemented, the method performed by the first apparatus in any one of the foregoing embodiments is implemented, or the method performed by the second apparatus in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement functions of the communication apparatuses in FIG. 6 to FIG. 9, an embodiment of this application further provides a chip, including a processor, configured to support the communication apparatus in implementing functions of the first node, the second node, the first apparatus, or the second apparatus in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A model scheduling method, comprising:

   receiving, by a first node, first information from a second node, wherein the first information indicates a first model;
   processing, by the first node, a second model based on the first model, to obtain a third model, wherein a structure of the third model is the same as a structure of the first model, and the second model and the first model are heterogeneous; and
   sending, by the first node, the second model to the second node, wherein the third model meets a preset condition.

2. The method according to claim 1, wherein the first information comprises a model index and/or a parameter of the first model.

3. The method according to claim 1 or 2, further comprising:

   receiving, by the first node, information about a fourth model from the second node, wherein the fourth model is obtained by using a second model of at least one first node;
   processing, by the first node, the fourth model based on the second model of the first node, to obtain a fifth model, wherein a structure of the fifth model is the same as a structure of the second model of the first node; and
   training, by the first node, the fifth model based on a preset parameter, to obtain an updated second model.

4. The method according to claim 3, further comprising:

processing, by the first node, the updated second model based on a sixth model, to obtain an updated third model, wherein the sixth model is indicated by the second node; and

sending, by the first node, the updated second model to the second node, wherein the updated third model meets the preset condition.

5. The method according to any one of claims 1 to 4, wherein the preset condition comprises a first threshold, and the first threshold indicates performance of the third model or the first threshold indicates a performance variation of the third model.

6. The method according to claim 5, wherein the preset condition is indicated by the second node.

7. The method according to claim 5 or 6, further comprising:

inputting, by the first node, the preset parameter into the third model, to obtain an output result; and

sending, by the first node, second information to the second node, wherein the second information indicates that model training is unfulfilled, and the output result does not meet the first threshold.

8. The method according to claim 1 or 2, further comprising:

inputting, by the first node, a preset parameter into the third model, to obtain an output result; sending, by the first node, the output result to the second node; and

receiving, by the first node, indication information from the second node, wherein the indication information indicates the first node to send the second model.

9. The method according to any one of claims 1 to 8, wherein the first model is preset based on at least one of the following:

a geographical location of the first node and a task executed by the first node.

10. The method according to any one of claims 1 to 9, wherein the receiving, by a first node, first information from a second node comprises:

receiving, by the first node, the first information from the second node through a sidelink;
receiving, by the first node, the first information from the second node through a common channel; or
receiving, by the first node, the first information from the second node through a dedicated channel of the first node.

11. A model scheduling method, comprising:

sending, by a second node, first information to at least one first node, wherein the first information indicates a first model;
receiving, by the second node, a second model from the at least one first node, wherein the second model and the first model are heterogeneous, and the first model is used to process the second model, to obtain a third model that has a same structure as the first model;
processing, by the second node, the second model to obtain a fourth model; and
sending, by the second node, the fourth model to the at least one first node.

12. The method according to claim 11, wherein the first information comprises a model index, and the model index indicates the first model; or the first information comprises a parameter of the first model.

13. The method according to claim 11 or 12, further comprising:
receiving, by the second node, an updated second model from the at least one first node, wherein the updated second model is obtained based on the fourth model.

14. The method according to any one of claims 11 to 13, further comprising:
sending, by the second node, a first threshold to the at least one first node, wherein the first threshold indicates performance of the third model or the first threshold indicates a performance variation of the third model.

15. The method according to claim 11 or 12, further comprising:
receiving, by the second node, second information from a third node, wherein the second information indicates that model training is unfulfilled, and the third node is one or more nodes in the at least one first node.

16. The method according to any one of claims 11 to 15, further comprising:

receiving, by the second node, an output result from the at least one first node, wherein the output result is an output result of the third model; and
sending, by the second node, indication information to a fourth node, wherein the indication information indicates the fourth node to send the second model, wherein
the fourth node is one or more nodes that are in the at least one first node and whose output results meet a second threshold.

17. The method according to any one of claims 11 to 16, wherein the first model is preset based on at least one of the following:
a geographical location of the first node and a task executed by the first node.

18. The method according to any one of claims 11 to 17, wherein the sending, by a second node, first information to at least one first node comprises:

sending, by the second node, the first information to the at least one first node through a sidelink;
sending, by the second node, the first information to the at least one first node through a common channel; or
separately sending, by the second node, the first information to the at least one first node through a dedicated channel of the at least one first node.

19. A model scheduling method, comprising:

receiving, by a first apparatus, I intermediate results from a second apparatus, wherein I is an integer greater than or equal to 1, the I intermediate results are outputs of I first models, and each of the I first models is obtained by fusing at least one third model;
inputting, by the first apparatus, an $i^{th}$ intermediate result into a second model, to obtain an $i^{th}$ first output result, wherein I is an integer greater than or equal to 1, and i is less than or equal to I; and
determining, by the first apparatus, a reference model in the I first models based on I first output results.

20. The method according to claim 19, further comprising:

sending, by the first apparatus, first information to the second apparatus, wherein the first information indicates the reference model;
receiving, by the first apparatus, second information from the second apparatus, wherein the second information indicates an intermediate result of at least one target third model, and the reference model is obtained by fusing the at least one target third model;
inputting, by the first apparatus, the intermediate result of the at least one target third model into the second model, to obtain at least one second output result; and
determining, by the first apparatus, a target model in the at least one target third model based on the at least one second output result.

21. The method according to claim 19 or 20, wherein the I intermediate results are carried in radio resource control RRC signaling; the I intermediate results are carried in a media access control physical resource unit MAC PDU; or the I intermediate results are carried in downlink control information DCI.

22. A model scheduling method, comprising:

grouping, by a second apparatus, a third model comprised in a third model set into I groups, wherein I is an integer greater than or equal to 1;
fusing, by the second apparatus, a third model comprised in an $I^{th}$ group, to obtain an $i^{th}$ first model, wherein I is an integer greater than or equal to 1, and i is less than or equal to I;
inputting, by the second apparatus, a preset parameter into the $i^{th}$ first model, to obtain an $i^{th}$ intermediate result; and
sending, by the second apparatus, I intermediate results to a first apparatus, wherein the I intermediate results are used to determine a reference model in I first models.

23. The method according to claim 22, further comprising:

receiving, by the second apparatus, first information from the first apparatus, wherein the first information indicates the reference model, the reference model belongs to the I first models, the reference model is obtained by fusing at least one target third model, and the at least one target third model belongs to the third model set;
inputting, by the second apparatus, the preset parameter into the at least one target third model, to obtain an intermediate result of the at least one target third model; and
sending, by the second apparatus, second information to the first apparatus, wherein the second information is used to determine a target model in the at least one target third model, and the second information comprises the intermediate result of the at least one target third model.

24. The method according to claim 22 or 23, wherein the sending, by the second apparatus, I intermediate results to a first apparatus comprises:

sending, by the second apparatus, the I intermediate results to the first apparatus by using radio resource control RRC signaling;
sending, by the second apparatus, the I intermediate results to the first apparatus by using a media access control physical resource unit MAC PDU; or

sending, by the second apparatus, the I intermediate results to the first apparatus by using downlink control information DCI.

25. A communication apparatus, comprising a unit configured to perform the method according to any one of claims 1 to 10.

26. A communication apparatus, comprising a unit configured to perform the method according to any one of claims 11 to 18.

27. A communication apparatus, comprising a unit configured to perform the method according to any one of claims 19 to 21.

28. A communication apparatus, comprising a unit configured to perform the method according to any one of claims 22 to 24.

29. A communication apparatus, comprising a processor and a memory, wherein

the memory is configured to store a computer program or instructions; and
the processor is configured to execute a computer program or instructions in the memory, to enable the apparatus to perform the method according to any one of claims 1 to 10, enable the apparatus to perform the method according to any one of claims 11 to 18, enable the apparatus to perform the method according to any one of claims 19 to 21, or enable the apparatus to perform the method according to any one of claims 22 to 24.

30. A communication apparatus, comprising a processor, wherein the processor is configured to execute a computer program or instructions, to enable the apparatus to perform the method according to any one of claims 1 to 10, enable the apparatus to perform the method according to any one of claims 11 to 18, enable the apparatus to perform the method according to any one of claims 19 to 21, or enable the apparatus to perform the method according to any one of claims 22 to 24.

31. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 10, the electronic apparatus is enabled to perform the method according to any one of claims 11 to 18, the electronic apparatus is enabled to perform the method according to any one of claims 19 to 21, or the electronic apparatus is enabled to perform the method according to any one of claims 22 to 24.

32. A computer program product, comprising computer-executable instructions, wherein when the computer-executable instructions are run on a computer, the computer is enabled to perform the method according to any one of claims 1 to 10, the computer is enabled to perform the method according to any one of claims 11 to 18, the computer is enabled to perform the method according to any one of claims 19 to 21, or the computer is enabled to perform the method according to any one of claims 22 to 24.

33. A communication system, comprising an apparatus configured to perform the method according to any one of claims 1 to 10 and an apparatus configured to perform the method according to any one of claims 11 to 18.

34. A communication system, comprising an apparatus configured to perform the method according to any one of claims 19 to 21 and an apparatus configured to perform the method according to any one of claims 22 to 24.

Network device

Terminal device

AI network element/module

FIG. 1

Central node

$\mathbf{g}^t_k$

$\mathbf{W}^t_g$

$\mathbf{W}^t_g$

$\mathbf{W}^t_g$

$\mathbf{g}^t_k$

$\mathbf{g}^t_k$

$\mathbf{W}^t_g$

Distributed node k

Distributed node k

Distributed node k

FIG. 2

```
┌─────────────┐                          ┌──────────────┐
│  First node │                          │ Second node  │
└─────────────┘                          └──────────────┘
       │                                        │
       │◄────── S301: First information ────────│
       │                                        │
┌──────────────────────────────────┐           │
│ S302: Process a second model based on         │
│  a first model, to obtain a third model       │
└──────────────────────────────────┘           │
       │                                        │
       │──────── S303: Second model ───────────►│
       │                                        │
       │                  ┌──────────────────────────────────┐
       │                  │ S304: Process the second model to │
       │                  │      obtain a fourth model        │
       │                  └──────────────────────────────────┘
       │                                        │
       │◄──────── S305: Fourth model ───────────│
       │                                        │
```

FIG. 3

| Node $K_1$ | Node $K_2$ | Node $K_3$ | Node N |
|---|---|---|---|

S401: First information

S401: First information

S401: First information

| S402: Process a second model of the node $K_1$ based on a first model, to obtain a third model of the node $K_1$ | S402: Process a second model of the node $K_2$ based on a first model, to obtain a third model of the node $K_2$ | S402: Process a second model of the node $K_3$ based on a first model, to obtain a third model of the node $K_3$ |
|---|---|---|
| S403: Input a preset parameter into the third model of the node $K_1$, to obtain a first output result | S403: Input a preset parameter into the third model of the node $K_2$, to obtain a second output result | S403: Input a preset parameter into the third model of the node $K_3$, to obtain a third output result |
| S404A: Determine, based on the first output result, whether the third model of the node $K_1$ meets an evaluation parameter | S404A: Determine, based on the first output result, whether the third model of the node $K_2$ meets an evaluation parameter | S404A: Determine, based on the first output result, whether the third model of the node $K_3$ meets an evaluation parameter |
| S404B: Obtain third information of the node $K_1$ based on the first output result | S404B: Obtain third information of the node $K_2$ based on the second output result | S404B: Obtain third information of the node $K_3$ based on the third output result |

S405B: Third information

S405B: Third information

S405B: Third information

S406B: Indication information

S406B: Indication information

TO FIG. 4B

TO FIG. 4B

FIG. 4A

CONT. FROM FIG. 4A        CONT. FROM FIG. 4A

S407A:
Second model

S407A: Second model

S407B: Train the second model

S408: The node N processes the
second model of the node $K_1$ and
the second model of the node $K_2$,
to obtain a fourth model

S409: Fourth
model

S409: Fourth model

S409: Fourth
model

| S410: Process the fourth model based on a sixth model, to obtain an updated third model of the node $K_1$ | S410: Process the fourth model based on a sixth model, to obtain an updated third model of the node $K_2$ | S410: Process the fourth model based on a sixth model, to obtain an updated third model of the node $K_3$ |
| --- | --- | --- |

FIG. 4B

First apparatus

Second apparatus

S501: Group a third model included in a third model set into I groups

S502: Fuse a third model in an $i^{th}$ group, to obtain an $i^{th}$ first model

S503: Input a preset parameter into the $i^{th}$ first model, to obtain an $i^{th}$ intermediate result

← —— S504: I intermediate results ——

S505: Input the $i^{th}$ intermediate result into a second model, to obtain an $i^{th}$ first output result

S506: Determine a reference model in I first models based on I first output results

├ — — - S507: First information — →

S508: Input the preset parameter into at least one third model, to obtain an intermediate result of the at least one third model

← — S509: Intermediate result of the at least one third model

S510: Input the intermediate result of the at least one third model into the second model, to obtain at least one second output result

S511: Determine a target model in the at least one third model based on the at least one second output result

FIG. 5

Communication apparatus 600

Processing unit 610

Transceiver unit 620

FIG. 6

Communication apparatus 700

Processor 710 ⟨---⟩ Memory 720

FIG. 7

Communication
apparatus 800

Transceiver 830

Antenna
833

Processor 810

Transmitter
831

Memory 820

Computer program,
configuration information,
computer program or
instructions, and/or data

Receiver
832

FIG. 8

Communication apparatus 900

Input/Output interface 910 ⟺ Logic circuit 920

FIG. 9

## INTERNATIONAL SEARCH REPORT

| | International application No. |
|---|---|
| | **PCT/CN2022/113137** |

| **A.** | **CLASSIFICATION OF SUBJECT MATTER** |
|---|---|

H04L27/00(2006.01)i

According to International Patent Classification (IPC) or to both national classification and IPC

| **B.** | **FIELDS SEARCHED** |
|---|---|

Minimum documentation searched (classification system followed by classification symbols)

IPC:H04L,H40W

Documentation searched other than minimum documentation to the extent that such documents are included in the fields searched

Electronic data base consulted during the international search (name of data base and, where practicable, search terms used)

CNTXT, ENTXTC, CNKI: 联合, 联邦, 学习, 模型, 分布, 节点, 融合, 参考, 输出, 中间, 结果, federated, learning, fl, machine, model+, node, dispatch, distrib+, output, refer+, intermediate

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 114648131 A (CHINA TELECOM CORP., LTD.) 21 June 2022 (2022-06-21) description, paragraphs 218-228 | 1-18, 25-26, 29-33 |
| A | CN 113011603 A (SHENZHEN QIANHAI WEBANK CO., LTD.) 22 June 2021 (2021-06-22) description, paragraph 120 | 1-34 |
| A | CN 114298326 A (HANGZHOU HIKVISION DIGITAL TECHNOLOGY CO., LTD.) 08 April 2022 (2022-04-08) entire document | 1-34 |
| A | WO 2021179196 A1 (GUANGDONG OPPO MOBILE COMMUNICATIONS CO., LTD.) 16 September 2021 (2021-09-16) entire document | 1-34 |
| A | WO 2021227069 A1 (GUANGDONG OPPO MOBILE COMMUNICATIONS CO., LTD.) 18 November 2021 (2021-11-18) entire document | 1-34 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 March 2023** | **22 March 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/113137**

| Patent document cited in search report | | | Publication date (day/month/year) | Patent family member(s) | | | Publication date (day/month/year) |
|---|---|---|---|---|---|---|---|
| CN | 114648131 | A | 21 June 2022 | None | | | |
| CN | 113011603 | A | 22 June 2021 | WO | 2022193432 | A1 | 22 September 2022 |
| CN | 114298326 | A | 08 April 2022 | None | | | |
| WO | 2021179196 | A1 | 16 September 2021 | CN | 115280338 | A | 01 November 2022 |
| WO | 2021227069 | A1 | 18 November 2021 | CN | 115427969 | A | 02 December 2022 |

Form PCT/ISA/210 (patent family annex) (July 2022)